# EUROPEAN PATENT SPECIFICATION

(11) **EP 0 666 236 B1**
(45) Date of publication and mention of the grant of the patent: **09.06.1999**
(21) Application number: 94113041.1
(22) Date of filing: 21.08.1994
(51) Int. Cl.: B66F 9/07, B66F 9/08

(54) **Inward/outward delivery device of automated warehouse**
Ein- und Auslagerungsvorrichtung bei automatisierten Warenlagern
Dispositif de stockage et de déplacement dans un entrepôt automatisé

(30) Priority: 07.02.1994 JP 1304394; 10.02.1994 JP 1560594
(43) Date of publication of application: 09.08.1995
(73) Proprietor: DAIFUKU CO., LTD., Osaka 555 (JP)
(72) Inventor: Yukuhiro,Goto c/o Daifuku Co., Ltd., Komaki Plant, Komaki-shi, Aichi-ken, Japan (JP); Yuso, Ogawa c/o Daifuku Co. Ltd. Komaki Plant, Komaki-shi, Aichi-ken, Japan (JP)
(74) Representative: Le Vrang, Klaus

(56) References cited:
- EP-A- 0 546 321
- EP-A- 0 581 234
- AT-B- 306 302
- CH-A- 678 310
- DE-A- 3 020 732
- DE-A- 4 117 857
- DE-C- 3 837 731
- GB-A- 1 213 229
- US-A- 5 188 199
- PATENT ABSTRACTS OF JAPAN, unexamined applications, M field, vol. 18, no. 2, January 6, 1994 THE PATENT OFFICE JAPANESE GOVERNMENT page 1 M 1536; & JP-A-05 246 509 (DAIFUKU CO LTD)
- SOVIET INVENTIONS ILLUSTRATED, P,Q sections, week 8430, September 5, 1984 DERWENT PUBLICATIONS LTD., London; & SU-A-1055 696 (ELECTROTECH PRODN)

## Description

### FIELD OF THE INVENTION

The present invention relates to an inward/outward delivery device of an automated warehouse, which is installed in a factory and capable of freely travelling on a predetermined route in front of corresponding shelves for example.

### BACKGROUND OF THE INVENTION

There is such an automated warehouse consisting of a plurality of shelves and an inward/outward delivery device like the one presented by Japanese Laid-Open Patent Application Publication No. 63-218406 (1988), which uses a crane functioning as an inward/outward delivery device having a pair of front and rear struts or a single strut erected on a bottom frame or a truck in conjunction with an elevating carriage guided to said strut(s).

Each strut has square cylindrical transverse section and a groove-shaped guide rail in the center of front-rear line or right-left line. In addition, each strut has a plurality of L-shaped plates projecting themselves to the left and to the right or in the forward and backward directions, where these L-shaped plates extend themselves from respective corners. In order to fix parts, a rail groove is formed in respective L-shaped plates. Each strut is composed of an integrally extruded member having transverse section with symmetrically arranged front-rear and right-left formation.

When introducing a pair of struts for example, those double struts set to front and rear positions are erected on a bottom frame by orienting the guide rail in the front-rear direction, i.e., in the running direction. Next, a guide roller is brought into contact with any surface that faces the elevating carriage side (i.e., in the front-rear direction) among those surfaces forming the guide rail part, where the guide roller prevents front-rear-directional swing from the elevating carriage from occurrence. At the same time, another guide roller is brought into contact with a pair of surfaces positioned on both sides, where the latter guide roller prevents right-left-directional swing from the elevating carriage from occurrence.

On the other hand, when introducing a single strut, the guide rail is erected on a truck in the right-left direction. Next, a guide roller is brought into contact with a pair of surfaces facing the front-rear direction among those surfaces forming the guide rail part, where the guide roller prevents front-rear-directional swing from the elevating carriage from occurrence, At the same time, another guide roller is brought into contact with a surface facing the right-left direction, where the latter guide roller prevents right-left-directional swing from the elevating carriage from occurrence.

However, when introducing the double struts according to the above exemplified prior art, since the L-shaped plates project themselves solely in the right-left direction, these L-shaped plates are by no means instrumental to reinforce the double struts in the front-rear direction. In consequence, these struts are apt to tilt themselves in the front-rear direction whenever accelerating or decelerating or discontinuing operating movement of the crane. Likewise, when introducing a single strut to the above structure, since the L-shaped plate projects itself solely in the right-left direction, the L-shaped plate is by no means instrumental to reinforce the strut in the right-left direction. In consequence, the single strut is apt to tilt itself in the right-left direction whenever delivering products into and out of a warehouse by operating a projected fork of a forklift truck.

Furthermore, since the direction of the single strut and tile double struts must compulsorily be shifted by 90 degrees from each other, error easily occurs while erecting the struts on the bottom frame or the truck, and yet, much labor and time must be spent before completing the strut-erecting work.

Another exemplified structure is presented by Japanese Patent Publication No. 53-3529 (1978) for example. Concretely, a shelf-loading lift functioning as a delivery device is equipped with a double-barrel winding machine secured thereto by projecting itself from external surface of a vertical frame. A suspension rope being wound or unwound via rotation of each drum of the double-barrel winding machine is swingably separated into front and rear parts by means of an upper pulley set to an upper frame and then interlinked with each guide frame of a loading platform. The above-cited double-barrel winding machine causes each barrel to pivot on the right-left-directional axis.

Nevertheless, according to the structure of the above-cited prior art, the suspension rope extended from the upper pulley to respective barrels is positioned by way of externally being exposed along external surface of the vertical frame. Thus, it not only generates rather poor appearance, but it also causes maintenance operator to easily come into contact with the suspension rope to incur potential hazard. To dispose of this problem, there is an idea to pass the suspension rope through a vertical cylindrical frame and then draw out the rope from the cylindrical frame body at the position of the double-barrel winding machine. However, when executing this method, cutout portion must be provided for the rope-extracting position. This in turn involves troublesome processing steps and causes strength to decrease, and yet, much labor and time must be spent to pass the suspension rope through the cylindrical frame body.

Furthermore, since each barrel has substantial length in the right-left direction and long distance from the upper pulley, the suspension rope swings itself by a wide amplitude to the left and to the right while being wound and unwound, thus generating problem in terms of security. Conventionally, such a suspension rope is composed of a plurality of wires impregnated or adhered with oil, and thus, when the rope swings, oil easily scatters to cause peripheral regions to be stained.

Furthermore, there is another structure for guiding upper part of a crane exemplified in Japanese Laid-Open Patent Application Publication No. 62-290609 (1987). According to this prior art, a warehouse crane is movably supported by a guide-rail unit installed on floor surface. An overhang member is provided by way of extending itself in the horizontal direction from an upper frame. A pair of vertical shaft roller functioning to inhibit swing motion and nipping an upper guide-rail unit from both sides are pivotally supported on the overhang member in such a state without upwardly projecting itself from the upper surface of the upper frame. In addition, a guide plate is also provided, which incorporates a recess for accommodating the upper guide rail unit for engagement therewith.

According to the structure of the above-exemplified art, upper surface of the upper frame can be brought to a position closest to a ceiling surface or a beam member that supports the upper guide rail. In addition, the above structure can promote storage efficiency of the operating warehouse by minimizing vertical-directional dead space including the upper frame. Furthermore, even in the event that the above-referred vertical shaft roller functioning to inhibit swing motion ever falls off, the crane can securely be prevented from falling to the left or to the right by virtue of proper engagement of recessed domain of the guide plate with the upper guide rail unit.

Nevertheless, according to the structure of the above exemplified art, since the center position of the crane is not coincident with the center of the guide rail unit, in other words, since the centers of the crane and the guide rail unit significantly deviate from each other in the right-left direction, when stopper action is generated as a result of forcible contact of the swing-motion-inhibiting vertical shaft roller wit[i the upper guide rail unit caused by biased load took place while delivering products into and from a warehouse by protruding a load transferring means in the lateral direction, the crane itself may incur distortion by effect of dispersed force. In addition, when stopper action is generated, substantial bending moment may act upon connecting part (joint portion) of the overhang member to break off the connection. If the connecting part were torn off, the guide plate will totally lose own function to prevent the crane from falling off.

Furthermore, there is such a structure for guiding lower part of a crane exemplified in Japanese Laid-Open Patent Application Publication No. 5-246509 (1993). According to this prior art, a delivery device is supportedly guided to a floor rail unit via drive wheels, follower wheels, and guide wheels. A detectable object having a detectable surface oriented to lateral direction is installed on the floor rail unit. A running-movement-controlling detection device is secured to the bottom of the delivery device, where the delivery device can freely face the detectable object from lateral side. According to this structure, products can be delivered from the delivery device to corresponding shelves or vice versa by combining travelling movement of the delivery device running on a predetermined route along front surface of shelves with vertical movement of an elevator and forward/backward movement of a delivery tool in lateral direction. Travelling movement of the delivery device can be controlled by causing the detection device to detect the object of detection.

Nevertheless, according to the structure of the above-exemplified art, detectable surface of the detectable object projects in the external lateral direction from lateral surface of the upper plate on the floor rail. This in turn permits dust of worn elements of wheels to easily deposit on the detectable surface to stain the detectable surface to consequently lower detection precision, thus eventually failing to correctly and stably control the whole system operation including travelling movement of the delivery device. Once such defect occurs, it will cause wheels of the other side to float themselves from floor rails by way of availing either side of front and rear wheels as supporting point while the delivery device accelerates or decelerates own moving speed or travels at a high speed or stops own movement in case of emergency. In an extreme case, wheels of the delivery device may run off from the floor rails or the delivery device may overturn itself.

Finally, there is a delivery device for use with an automated warehouse exemplified in the European Patent Application 0 581 234 A1. A movable main body is structured by integrating a bottom frame structure with two struts, wherein a carriage unit capable of freely moving in the vertical direction is provided along one of front and rear surfaces of the struts.

Each strut comprises a hollow body having rectangular cross-section, four corner fitting strip members projecting themselves outside from respective corners of the rectangular hollow body, and two center jut members projecting itself outside from the hollow body. The hollow body, the corner fitting strip members and the center jut members are integrally molded into a strut unit.

The carriage is provided with rollers for inhibiting oscillations in the forward and rearward directions which are guided by front and rear guide faces formed in vertical direction on the struts, and rollers for inhibiting lateral oscillations which are guided by side guide faces.

The delivery device of the above-exemplified art contains a elevator drive unit and a running drive unit which are located outward of any strut. The carriage is ascending and descending by chains which are guided upwardly through the hollow body of one strut. The location of the chains makes it difficult to install or to repair them.

### DISCLOSURE OF THE INVENTION

It is an object of the invention to provide a novel delivery device usable for an automated warehouse, wherein installation of wires along struts can easily and safely be implemented by way of generating neat appearance, wherein each wire can be wound and unwound by generating minimum amplitude of swing in the right-left direction, wherein impregnated oil can be prevented from splashing over periphery of the wire system, and wherein struts can easily and firmly be erected independent of single-strut formation or double-strut formation introduced therefor.

It is a still further object of the invention to provide a novel delivery device usable for an automated warehouse, wherein the delivery device contains minimal vertical-direction dead space and prevents itself from falling down to the left and to the right, wherein, when stopper action is activated, the delivery device can guide upper part of the movable main body via a ceiling rail without dispersing force, wherein the delivery device can securely prevent itself from falling down even when guide rollers are broken, and wherein the delivery device can Prevent detectable surface of detectable object from incurring stain independent of installation environment, and yet, quickly cope with floating of own wheels.

To achieve the above objects, the invention provides a delivery device usable for an automated warehouse, wherein the delivery device comprises a bottom frame structure having the features of the preamble of claim 1.

According to the invention the wires stretched between the upper and lower guide rollers are positioned inside of the vertically formed groove provided for the front and rear domains.

According to the structure embodied by the invention, the wires extended from the elevator drive unit are initially engaged with the lower guide rollers from the strut side and then installed inside of the groove from external side. The wires are then engaged with the upper guide rollers from the top side, and then, vertically extended downward before eventually being linked with the carriage to complete the wire installing process. The carriage is lifted and lowered by initially transmitting shifting force to the wires via winding or unwinding of the wires to permit the upper guide rollers to guide shifting movement of the wire. While the carriage is lifted or lowered, the wires is arranged to shift itself inside of the front-rear grooves between the upper and lower guide rollers.

According to an aspect of the above embodiment of the invention, the elevator drive unit incorporates a rotatable drum in the periphery of right-left directional axis being orthogonal to the front-rear direction. The wires from the drum are linked with the carriage via the upper guide rollers installed to the upper part of the movable main body, whereas the lower guide rollers are so arranged that it can freely shift in the direction along the right-left directional axis.

According to the above embodiment, the above-referred drum is rotated in the clockwise or counterclockwise direction in the periphery of the right-left directional axis. This causes the wires to be wound or unwound via rotation of the drum in either direction and receive shifting force to activate lifting or lowering movement of the carriage. While the carriage ascends or descends, the lower guide rollers reciprocate itself in the right-left direction. In consequence, it prevents the wires from sharply swinging itself between the upper and lower guide rollers. In addition, this also makes it possible to execute helicoidal winding of the wires onto the drum and the unwinding therefrom.

According to an aspect of the above embodiment, a bearing unit is installed between the lower guide rollers and the supporting shaft thereof, wherein the bearing unit permits the lower guide rollers to reciprocate itself in the direction along the right-left directional axis by applying lateral-directional force of the wire generated on the way of winding the wires onto the drum and unwinding the wire therefrom. A concealing cover is secured to the strut in order to externally conceal the wire in a range from the lower guide rollers to the elevator drive unit. This in turn creates neat appearance on both sides and in the front-rear direction of the strut when externally viewing the strut structure. Furthermore, the concealing cover prevents the wires from coming into contact with warehouse operators and any of those which are handled in the operating site, and yet, the cover securely receives oil scattered from the wires. Another cover is also secured to the strut side in order to externally conceal the groove. Since the wires shift itself inside of the grooves in a range from the upper guide rollers to the lower guide rollers while the carriage ascends or descends, and in addition, since the cover conceals external portion of the groove, both the wires and the grooves are fully concealed when viewing the lateral sides and the front-rear sides of the strut, thus creating neat appearance of the whole strut structure. In this way, provision of concealing covers prevents warehouse operators and those which are handled in the operating site from coming into contact with the wire and associated mechanism, and yet, oil scattered from the travelling wire can securely be received by the concealing covers and the strut structure.

According to an aspect of a preferred embodiment of the invention described above, the bottom frame structure has a plurality of wheels respectively being supported and guided by a floor rail unit. The elevator drive unit consists of a drum facing the strut and a drive unit secured to an end of a right-left-directional side in opposition from the drum. A travel drive unit linked with the travelling wheels is secured to an end of the other right-left-directional side in opposition from the drum.

According to this embodiment, even when the movable main body is about to tilt itself after being affected by suspending force of the wire unit, because of substantial load generated by the travel drive unit secured to the other side of the drive mechanism, part of the tilting force is offset, thus permitting the movable main body to smoothly and stably continue own travelling operation.

According to another aspect of the above embodiment, each strut has rectangular cross section. A pair of right-left-directional front and rear grooves are formed in the upper and lower direction on the other side of the strut. In addition, left and right grooves are formed in the upper and lower direction on both sides of the right-left direction. A pair of right-left-directional guide surfaces are formed by means of left and right surfaces of a pair of front-rear grooves in order to prevent the strut from swinging itself to the left and to the right. Likewise, a pair of front-rear-directional guide surfaces are formed by means of front-rear-directional surfaces of the right-left grooves in order to prevent the strut from swinging itself back and forth. The right-left-directional guide surfaces and the front-rear-directional guide surfaces are respectively formed in corner domains which are respectively formed in rectangular fitting strip members.

According to the above embodiment, up and down movement of the carriage can be performed very smoothly without generating accidental swing owing to smooth guidance via the right-left-directional guide surfaces respectively inhibiting right-left-directional swing and the front-rear-directional guide surfaces respectively inhibiting front-rear-directional swing. Furthermore, even when the carriage strongly hits against the right-left-directional guide surfaces or the front-rear-directional guide surfaces, by virtue of reinforcing structure of the rectangular fitting strip members, the carriage can securely be prevented from incurring unwanted bending.

To achieve the above objects, the invention provides a novel delivery device usable for an automated warehouse, wherein the delivery device comprises a bottom frame structure, a movable main body consisting of a single strut or double struts erected on the bottom frame structure, and a carriage unit which is capable of freely ascending and descending itself and movably disposed to one-side surface of the strut along front-rear direction corresponding to the travelling direction of the movable main body. An elevator drive unit is secured to the lower part of the other side surface of the erected strut in order to wind and unwind a plurality of wire units. These wires extended from the elevator drive unit are respectively wound on a plurality of right-left-directional guide wheels secured to the upper part of the movable main body, and then the wires are interlinked with the carriage. The guide wheels are discretely disposed to the left and to the right by way of traversing the center of the movable main body. Clearance enough to internally accommodate a ceiling rail unit is formed between the guide wheels disposed to the left and to the right. In addition, a pair of left and right guide rollers for nipping the ceiling rail unit and members for accommodating the ceiling rail unit are respectively secured to the upper part of the movable main body.

According to the invented structure described above, since the center of the movable main body correctly matches the center of the ceiling rail unit, work for installing the delivery device can easily be implemented. Since the upper guide rollers are properly guided to both-side surfaces of the ceiling rail unit, the movable main body can stably move on itself without fear of incurring overturn. For example, even when stopper action is generated as a result of forceful collision of guide rollers with the ceiling rail caused by biased load on the way of performing inward or outward delivery of products, since the upper guide rollers are properly guided to the ceiling rail from both sides, and yet, since the center of the ceiling rail correctly matches the center of the movable main body, impact force generated by collision solely concentrates onto the centers of the ceiling rail unit and the movable main body without being dispersed, and therefore, the movable main body rarely incurs unwanted distortion.

When stopper action is generated, no substantial bending moment acts upon connector part (joint portion) of a pair of fall-preventive members, and thus, there is no fear of breaking off the connection. Therefore, even when the upper guide rollers are accidentally broken off, the fall-preventive members respectively come into contact with both sides of the ceiling rail, thus securely preventing the movable main body from falling down itself to the left or to the right. Furthermore, since the ceiling rail is positioned between the left and right guide wheels, these guide wheels can safely run themselves without fear of coming into collision or contact with the ceiling rail. At the same time, installed wires are smoothly shifted along both sides of the ceiling rail without coming into collision or contact with it.

According to an aspect of the above embodiment, a pair of struts are disposed in the front-rear direction, where the upper ends of the two struts are linked with each other by means of an upper frame structure. A carriage is installed between both struts. A pair of left and right wire units are wound on a pair of base-side right and left guide wheels secured to the upper frame structure on the side of an elevator drive unit. One of the right and left wire units is then linked with the carriage, whereas the other wire unit is wound on a guide wheel on the idler side of the upper frame structure on the side apart from the elevator drive unit. Then, the latter wire unit is also linked with the carriage. Clearance is formed between two base-side guide wheels. The idler-side guide wheel is installed on the other side across the center of the movable main body.

According to the above embodiment, since the ceiling rail is positioned between a pair of base-side guide wheels and at one side of the idler-side guide roll, the delivery device can smoothly travel itself without causing any of the guide wheels to come into collision or contact with the ceiling rail. Ascending or descending operation of the carriage is performed by way of guiding the moving wires via respective guide wheels. The wires can smoothly be conveyed along both external sides of the ceiling rail without coming into collision or contact with the ceiling rail.

According to another embodiment of the invention described above, each of the fall-preventive members is provided with a pair of guide rollers aligned to the left and to the right. In this embodiment, by virtue of securing the fall-preventive members to the upper part of the movable main body, the right and left guide rollers can be installed simultaneously with precision. In addition, when stopper action is generated, no substantial moment acts upon the connector parts of the fall-preventive members respectively having a pair of guide rollers, thus eliminating fear of breaking off the connection.

To achieve the above objects, the invention provides a novel automated warehouse comprising a plurality of shelves each accommodating a plurality of storage rooms and a delivery device capable of freely running on a predetermined route in front of these shelves in the manner supportedly being guided on a floor rail via plural wheels, wherein the floor rail has I-shaped cross section, wherein a plurality of detectable objects having detectable surfaces oriented to one side are set to a lateral surface of a web, wherein one side of an upper frame structure is projectively formed by way of projecting itself beyond a range in which detectable objects are aligned, wherein a detection device for controlling running operation of the delivery device and a plurality of fall-preventive rollers capable of freely coming into contact with the projective flange from the bottom side are respectively provided below the delivery device, wherein the running-control detection device can freely face detectable surfaces of respective detectable objects from lateral position.

According to the invented structure described above, by way of cooperatively combining running operation, inward/outward delivery operation, and ascending/descending operation of the carriage unit, with each other, the delivery device can deliver products into and out of objective storage rooms of corresponding shelf. Since travelling wheels of the delivery device are supportedly guided on the upper surface of an upper flange structure, the delivery device can stably and smoothly perform running operation. Running operation of the delivery device such as disconnection from high-or-medium speed run or stop of running operation at a predetermined position can controllably be executed by enabling a detection device to detect detectable surfaces of respective detectable objects.

Since a projected flange is positioned above detectable surfaces of detectable objects and further outside of one ends of the detectable surfaces, dust of worn elements of travelling wheels and dust fell down from the top of the automated warehouse can hardly adhere to the detectable surfaces of detectable objects, in other words, detectable surfaces can hardly be stained with dust. As a result, detectable surfaces of detectable objects can maintain clean condition for a long while, thus enabling the detection device to precisely detect detectable surfaces throughout detecting operation. In consequence, operation of the whole system including operation of the delivery device can stably be controlled with precision.

In the event that either side of the travelling wheels is about to float themselves from the floor rail because of impact force caused by acceleration, deceleration, high-speed run, or sudden stop of the delivery device in case of emergency, a plurality of fall-preventive rollers disposed nearby the travelling wheels quickly come into contact with the projected flange to prevent wheels from floating upward, thus securely Preventing all the wheels of the delivery device from being disengaged from the floor rail and the delivery device itself from incurring overturn.

According to an aspect of the embodiment of the invention described above, a plurality of downwardly extending jut members are secured to peripheral edge of the projected flange. The downwardly extended jut members set to periphery of the projected flange securely prevent dust on the peripheral domain of the projected flange from directly falling onto detectable surfaces of the detectable objects. In other words, dust can hardly gain access to detectable surfaces of the detectable objects.

According to an aspect of the embodiment of the invention described above, peripheral edge of the projected flange externally protrudes further from peripheral edge of the bottom flange structure. Owing to this structural arrangement, dust passed by peripheral edge of the projected flange can hardly fall on the bottom flange structure nor deposit thereon. In consequence, this structural arrangement securely prevents dust from adhering onto detectable surfaces of detectable objects otherwise caused by suspending of dust from the upper surface of the bottom flange structure.

### BRIEF DESCRIPTION OF THE DRAWINGS

Fig. 1 is a partially exposed lateral view of the delivery device usable for an automated warehouse according to the first embodiment of the invention;
Fig. 2 is a partially exposed front view of the delivery device usable for an automated warehouse shown in Fig. 1;
Fig. 3 is a plan of a bottom frame structure of the delivery device usable for an automated warehouse shown in Fig. 1;
Fig. 4 is a plan of an upper frame structure of the delivery device usable for an automated warehouse shown in Fig. 1;
Fig. 5 is a cross-sectional plan of strut mechanism of the delivery device usable for an automated warehouse shown in Fig. 1;
Fig. 6 is a partially exposed lateral view of an elevator drive unit provided for the delivery device usable for an automated warehouse shown in Fig. 1;
Fig. 7 is a front view of the elevator drive unit of the delivery device usable for an automated warehouse shown in Fig. 1;
Fig. 8 is a cross-sectional plan of mechanical structure incorporating lower guide wheels secured to the delivery device usable for an automated warehouse shown in Fig. 1;
Fig. 9 is a partially exposed lateral view of the delivery device usable for an automated warehouse according to the second embodiment of the invention;
Fig. 10 is a cross-sectional plan of strut mechanism of the delivery device usable for an automated warehouse shown in Fig. 2;
Fig. 11 is a cross-sectional plan of strut mechanism of the delivery device usable for an automated warehouse according to the third embodiment of the invention;
Fig. 12 is a cross-sectional plan of strut mechanism of the delivery device usable for an automated warehouse according to the fourth embodiment of the invention;
Fig. 13 is a cross-sectional plan of strut mechanism of the delivery device usable for an automated warehouse according to the fifth embodiment of the invention;
Fig. 14 is a lateral view of an upper frame structure provided for the delivery device usable for an automated warehouse according to the sixth embodiment of the invention;
Fig. 15 is a vertical-sectional front view of base-side guide wheels in the upper frame structure provided for the delivery device usable for an automated warehouse related to the invention;
Fig. 16 is a front view of an upper guide roller provided for the delivery device usable for an automated warehouse related to the invention;
Fig. 17 is a vertical-sectional front view of an idler-side guide wheel in the upper frame structure provided for the delivery device usable for an automated warehouse related to the invention;
Fig. 18 is a partially exposed lateral view of the delivery device usable for an automated warehouse according to the seventh embodiment of the invention;
Fig. 19 is a plan of a bottom frame structure provided for the delivery device usable for an automated warehouse related to the invention; and
Fig. 20 is a partially exposed front view of a floor rail unit installed in the automated warehouse related to the invention.

### DESCRIPTION OF THE PREFERRED EMBODIMENTS

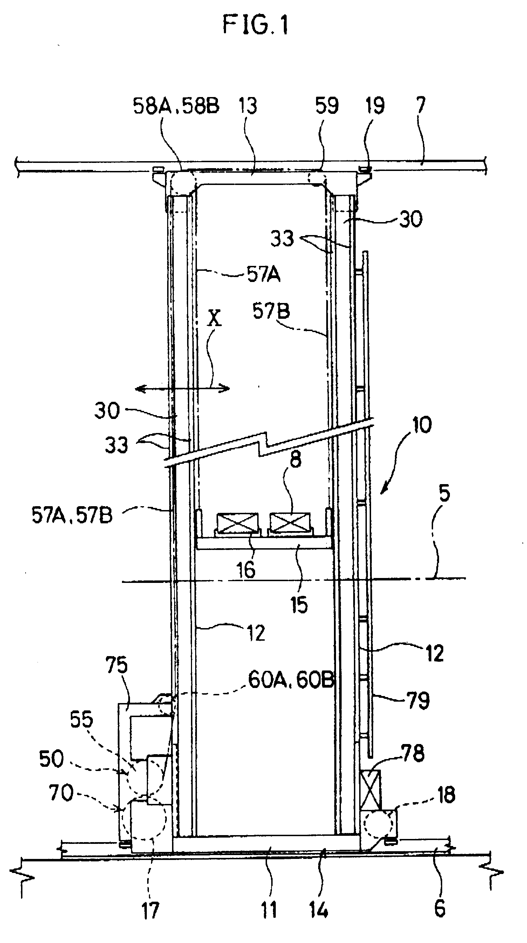

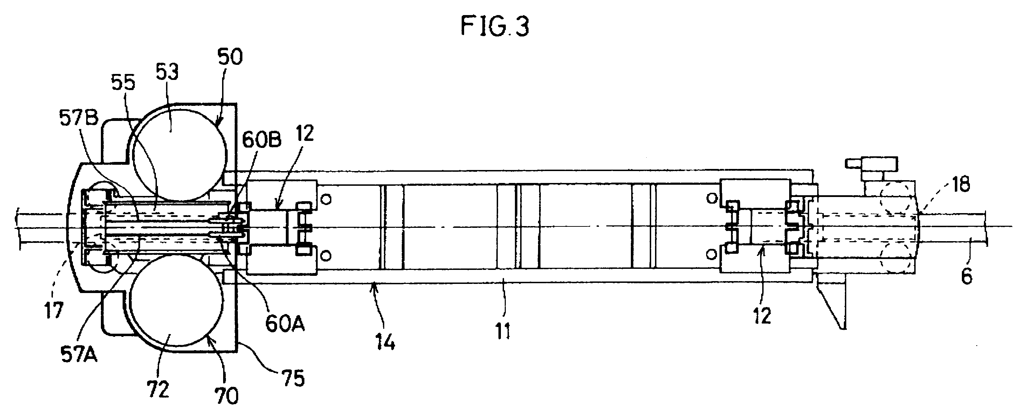

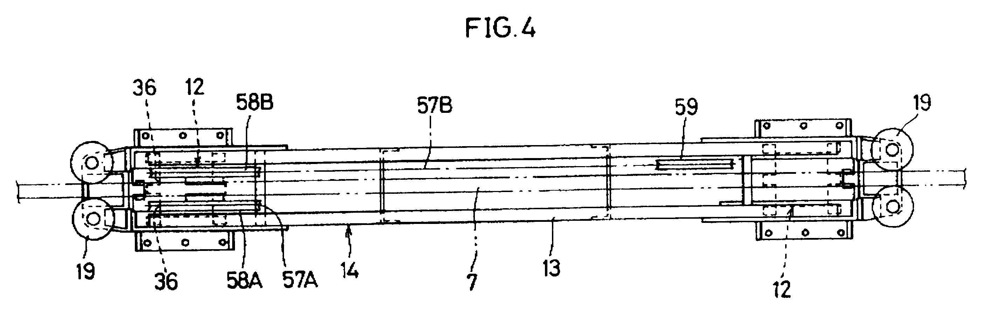

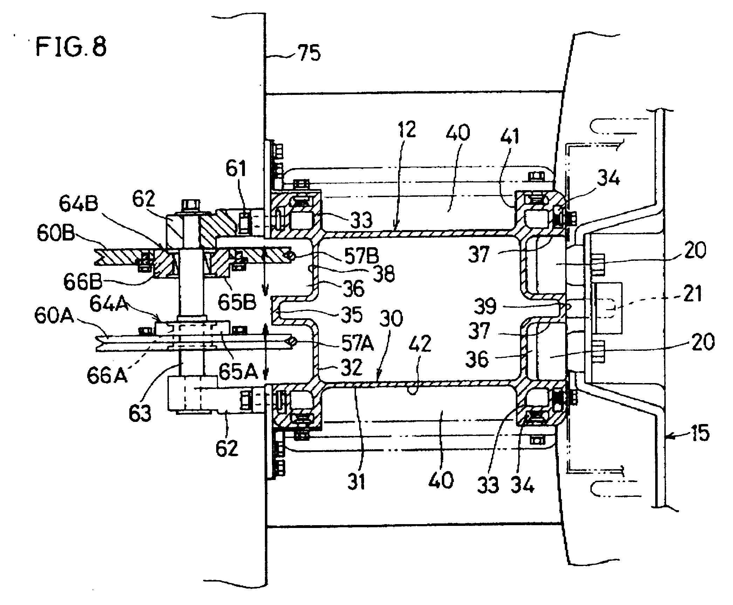

Referring now to Figures 1 through 8, structural detail of the delivery device according to the first embodiment of the invention is described below.

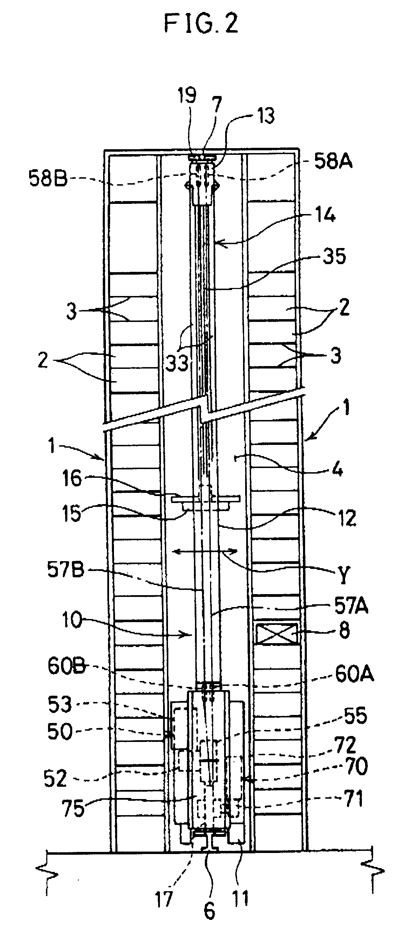

As shown in Figures 1 and 2, a plurality of storage rooms 2 are provided in the vertical and horizontal directions inside of framed shelves 1 and 1. Each storage room 2 is structured in order that it can directly store load via brackets 3 or pallets. These shelves 1 and 1 are disposed in parallel with each other across a passageway 4 in which an inward/outward delivery device 10 is disposed by way of freely travelling itself on a predetermined route 5.

A movable main body 14 is provided for the delivery device 10. The movable main body 14 structurally consists of a bottom frame unit 11, a pair of struts 12 erected on the bottom frame unit 11 in the front-rear direction X, in other words, in the travelling direction, and an upper frame unit 13 interlinking tip ends of these struts 13. A carriage 15 is disposed between these struts 13 by way of freely ascending and descending itself. In addition, a delivery tool 16 such as a fork and/or a conveyer attached with a stopper means is disposed on the carriage 15 in order to execute inward/outward delivery of load to and from to and from respective storage rooms 2.

A drive wheel (travelling wheel) 17 and a follower wheel (travelling wheel) 18 respectively being held and guided by a floor rail 6 are discretely disposed in the front-rear direction X in the structure of the bottom frame unit 11. A pair of right-left-directional guide rollers 19 guided by a ceiling rail 7 are discretely disposed in the front-rear direction X in the structure of the upper frame unit 13.

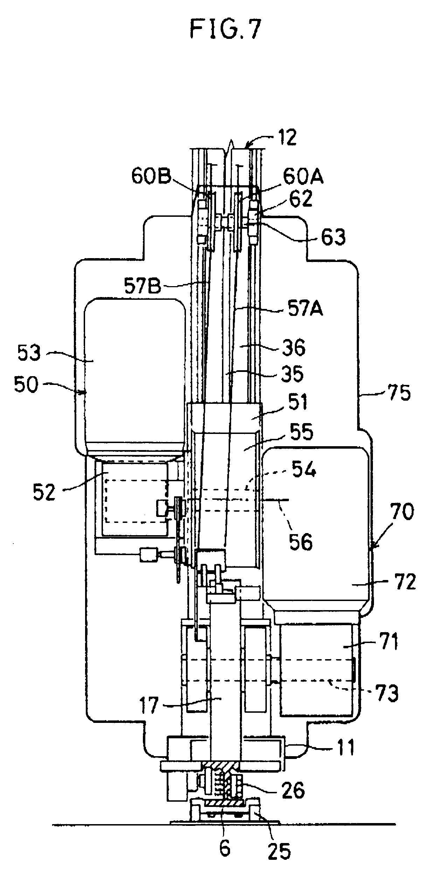

As shown in Fig. 7, the floor rail 6 has I-shaped cross section, which is secured to floor via a fixture member 25 that acts upon a lower flange unit. A pair of control rails 26 are installed on both-side surfaces of a web portion in order that power can be supplied and signal can be transmitted and received therethrough.

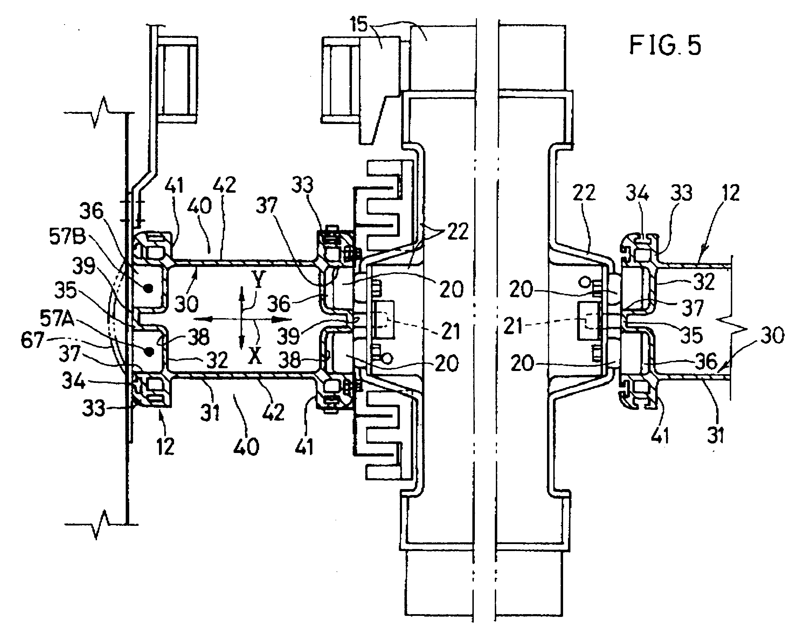

Each strut 12 is integrally molded by extruding aluminium for example. As shown in Fig. 5, a pair of front-rear-directional struts 12 are erected without selecting direction, where each strut 12 has a cross section being symmetrical in the front-rear and right-left directions.

Concretely, the integrally molded strut 12 comprises the following; a hollow body 30 having rectangular cross section, a plurality of corner fitting strips 33 outwardly projecting themselves in the front-rear and right-left directions from four corners, and a plurality of center juts 35 outwardly projecting themselves in the front-rear direction X from the center of the right-left direction Y on the front-rear-directional external surfaces of the rectangular-sectional hollow body 30. The rectangular-sectional hollow body 30 consists of a pair of long-side members 31 facing each other in the right-left direction Y and a pair of short-side members 32 facing each other in the front-rear direction. A pair of struts 12 are respectively erected on the bottom frame unit 11 in the front-rear direction X by setting a pair of short-side members 32 to form the front-rear-directional external surfaces.

The corner fitting strips 33 are respectively of rectangular shape. A plurality of dovetail grooves 34 for interlinkage with peripheral components are respectively formed in the latitudinal direction on the foremost external surfaces of respective fitting strips 33 in the front-rear direction X and the right-left direction Y. The center juts 35 respectively have rectangular cross section, which are respectively formed in the state being folded from the right-left-directional centers of the short-side members 32 and externally projecting themselves in the front-rear direction X, where inner space of respective juts 35 is interlinked with inner space of the hollow body 30.

Using a pair of right-left-directional corner fitting strips 33 and a pair of center juts 35, a pair of front-rear grooves 36 are formed in the right-left direction Y by way of vertically being formed on both side surfaces (on a surface and on the other surface) corresponding to the front-rear direction X. The right and left surfaces for forming the front-rear grooves 36 are respectively formed on right-left-directional external guide surfaces 37 available for inhibiting right-left-directional swing. On the other hand, front-rear-directional surface (facing the carriage 15) of the hollow body 30 available for forming the front-rear grooves 36 is formed on the first external front-rear-directional guide surface 38 available for inhibiting front-rear directional swing. On the other hand, front-rear directional surface (facing the carriage 15) of the center juts 35 is formed on the second external front-rear-directional guide surface 39 available for inhibiting front-rear-directional swing.

Using a pair of front-rear-directional corner fitting strips 33, a pair of right-left grooves 40 are formed in latitudinal direction on both surfaces (in the right-left direction Y) of the strut 12. Internal surfaces (being opposite from the carriage 15 and in the front-rear direction X) of the right-left grooves are respectively formed on internal front-rear-directional guide surfaces 41 available for inhibiting front-rear-directional swing. On the other hand, external surfaces (in the Y) of the right-left grooves 40 are respectively formed on internal right-left-directional guide surfaces 42 available for inhibiting right-left-directional swing.

As described above, availing of the hollow body 30, the first external front-rear-directional guide surfaces 38 and the internal right-left-directional guide surfaces 42 are respectively formed on the strut 12, wherein, availing of the corner fitting strips 33, the external right-left-direction guide surfaces 37 and the internal front-rear-directional guide surfaces 41 are respectively formed, and wherein, availing of the center fitting strips 35, the external right-left-directional guide surfaces 37 and the second external front-rear-directional guide surfaces 39 are respectively formed.

On the part of the carriage 15, a pair of the right-left-directional rollers 20 (for inhibiting right-left-directional swing) to be guided onto the external right-left-directional guide surfaces 37 and a plurality of front-rear-directional swing inhibiting rollers 21 to be guided onto the second external front-rear-directional guide surfaces 39 are respectively installed to plural locations in the latitudinal direction via corresponding brackets 22. In consequence, the right-left-directional swing inhibiting rollers 20 secured to both sides jointly nip the center juts 35 along the right-left direction Y. The above swing-inhibiting rollers 20 and 21 are respectively made from flexible resin such as polyurethane resin for example.

As shown in Figures 1 through 3 and 6 through 8, an elevator drive unit 50 is installed to one-side of the lower frame structure 11, in other words, to the lower part of a surface of one of the double struts 12. The elevator drive unit 50 winds and unwinds a pair of wire units. The drive unit 50 comprises the following; a support body 51 secured to the lower part of a surface of one of the double struts 12, a reduction gear unit 52 secured to the support body 51, a vertically erected motor unit 53 (incorporating flange-type brake) installed above the reduction gear unit 52 via linkage therewith, and a cantilever drum 55 secured to an output shaft 54 extended from the reduction gear unit 52. The drum 55 is opposite from one of the double struts 12 and freely rotatable in the periphery of right-left-directional axis 56 (axis of the output shaft) orthogonal to the front-rear direction X. Both the reduction gear unit 52 and the motor unit 53 are respectively disposed to one side of the right-left direction Y against the drum 55.

Wire winding surface of the drum 55 is divided into two parts in the right-left direction Y so that a pair of wires consisting of the first wire unit 57A and the second wire unit 57B can respectively be wound on and unwound from the two discrete parts in which hericoidal wire guide grooves are formed based on a predetermined pitch.

The wire units 57A and 57B are elongated upward, and then, as shown in Figures 1, 2, and 4, both wire units are wound on a pair of large-diametral upper guide wheels 58A and 58B secured to an edge portion of the upper frame structure 13. After being drawn downward, the first wire unit 57A is linked with an end portion of the carriage 15. Initially, the second wire unit 57B is wound on a small-diametral upper guide wheel 59 secured to the other end of the upper frame structure 13, and then, after being drawn downward, the second wire unit 57B is linked with the other end of the carriage 15.

As shown in Figures 1 through 3 and 6 through 8, a pair of lower guide wheels 60A and 60B are installed above and close to the elevator drive unit 50. A pair of right-left brackets 62 are secured to the strut via a pair of bolt nuts acting upon a pair of dovetail grooves 34. A support shaft 63 along the right-left-directional axis 56 is secured between the right and left brackets 62.

A pair of lower guide wheels 60A and 60B are externally coupled with the support shaft 63 in the right-left direction Y via a pair of bearings 64A and 64B. The bearings 64A and 64B respectively cause the lower guide wheels 60A and 60B to freely rotate themselves, and yet, cause these guide wheels 60A and 60B to automatically reciprocate themselves in the direction along the right-left-directional axis 56 by applying lateral-directional force of the wire units 57A and 57B generated while winding or unwinding these wires 57A and 57B via the drum 55. The bearings 64A and 64B respectively comprise core metal 65A and 65B respectively being secured to the lower guide wheels 60A and 60B and stroke ball bearings 66A and 66B respectively being interposed between the core metals 65A and 65B and the support shaft 63.

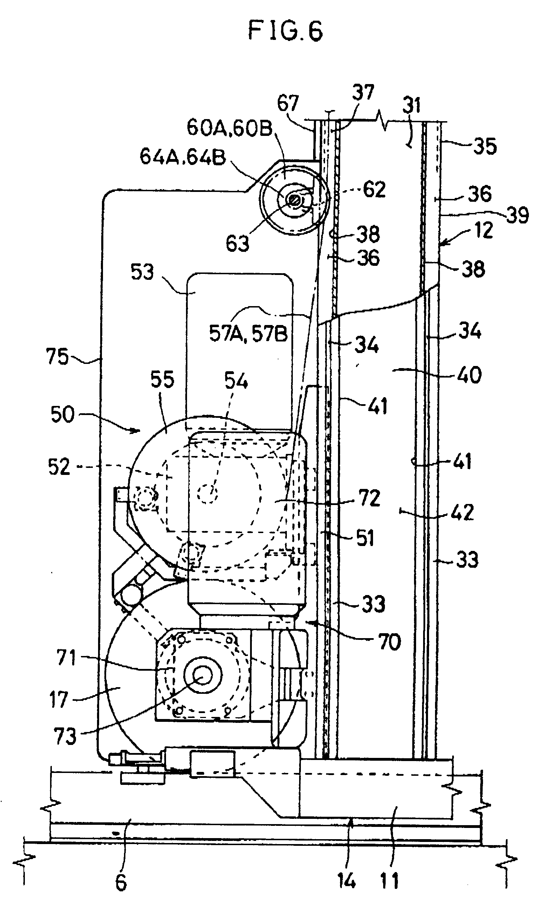

The lower guide wheels 60A and 60B are respectively so disposed that peripheral domains of the lower guide wheels 60A and 60B on the part of the strut 12 can discretely protrude into a pair of front-rear grooves 36. As shown in Fig. 5 with virtual lines and in Fig. 6, a plate cover 67 externally concealing the front-rear grooves 36 accommodating the wire units 57A and 57B is secured on the part of the strut 12. The cover 67 is secured to the strut 12 with fixing means that acts upon the dovetail grooves 34.

As shown in Figures 1 through 3 and 6 and 7, a running drive unit 70 linked with the drive wheel 17 is secured to lower part of an end of the lower frame structure 11, in other words, to lower part of a surface of one of the double struts 12. The running drive unit 70 concurrently serves as the support body 50 described above, wherein the drive unit 70 comprises a reduction gear units 71 secured to the support body 51 and a vertically erected drive means such as a motor (incorporating flange-type brake) secured onto the reduction gear unit 71 in linkage therewith. The drive unit 70 is secured to the other side of the right-left direction Y against the drum 55.

A box-form cover unit 75 is secured to one of the struts 12 with fixture means acting upon the dovetail grooves 34. The box-form cover unit 75 not only externally conceals the wire units 57A and 57B in a range from the lower guide wheels 60A and 60B to the elevator drive unit 50, but it also externally conceals the elevator drive unit 50 and the running drive unit 70 as well. The reference numerals 78 and 79 respectively designate a controller unit and a ladder.

Referring to Figures 1 through 8, systematic operation of the delivery device according to the first embodiment is described below.

In the course of assembling the delivery device, each strut 12 can readily be erected on the bottom frame structure 11 without particularly minding the way of orientation to be 90 degrees or 180 degrees, but the struts 12 can be erected merely by aligning the long-side members 31 in the front-rear direction X. The carriage 15 is disposed between the double struts 12 by coupling the right-left-directional swing-inhibiting rollers 20 with the front-rear grooves 36 and by enabling the front-rear-directional fall-preventive rollers to come into contact with the second external front-rear-directional guide surface 39.

A pair of wire units 57A and 57B are respectively installed to the strut structure after once removing the concealing covers 67 and 75 therefrom. Since the drum 15 is of open-sided form, the wire units 57A and 57B can easily be wound on the drum 55 via the open side, and yet, inspection and maintenance work can readily be executed via the open side of the drum 55. Next, the wire units 57A and 57B are discretely coupled with the lower guide wheels 60A and 60B from the strut side. Next, the wire units 57A and 57B are discretely installed in the front-rear grooves 36 from the outer side, and then the wires 57A and 57B are respectively engaged with the upper guide wheels 58A, 58B, and 59 from the top side. Then, the wires 57A and 57B are discretely elongated downward before being linked with the carriage 15. Finally, the concealing covers 67 and 75 are respectively secured to the original positions.

According to the structure of the delivery device, the elevator drive unit 50 and the running drive unit 70 are disposed on both sides in the right-left direction Y across the drum 55 of the elevator drive unit 50 in the vertical-directional arrangement. This in turn permits the delivery device 10 to contract own lateral width and front-rear-directional length.

Based on operating instructions transmitted via a running power unit (not shown), the delivery device 10 causes the movable main body 14 to run itself on a predetermined route 5 via the running drive unit 70 and also causes the delivery instrument 16 to reciprocate itself in the right-left direction Y. In addition, based on operating instructions transmitted via the elevating drive unit 50, the delivery device 10 also drives the carriage 15 in the vertical direction. By effectively performing these systematic operations in linkage with each other, the delivery device 10 can follow up inward/outward delivery of load 8 to and from an objective storage room 2 of the corresponding shelf 1.

While the movable main body 14 moves on, since the wheels 17 and 18 are supported and guided by the floor rail unit 6 and yet the guide rollers 19 are guided by the ceiling rail unit 7, the movable main body 14 can stably move on itself without fear of incurring overturn at all. Certain force motivating the struts 12 to tilt themselves in the front-rear direction X caused by shock occurring at the moment of acceleration, deceleration, and stopping movement of the delivery device 10 can securely be received by the bottom frame structure 22 in addition to reinforcing structure formed by means of the corner fitting strips 33 projecting themselves in the front-rear direction X from the hollow body 30. Since the long-side members 31 of the cylindrical body 30 are disposed in the front-rear direction X, availing of sufficient length of the long-side members 31, stress to motivate the struts 12 to tilt themselves in the front-rear-direction X can more securely be received. Thus, the struts 12 can stably be erected on the bottom frame structure 11 without fear of tilting themselves in the front-rear direction X.

The carriage 15 is lifted and lowered by sequentially executing those serial operations described below. Initially, normal or reverse directional rotation of the elevator drive unit 53 is transmitted to the output shaft 54 via the reduction gear unit 52 to rotate the drum 55 in the normal or reverse direction, and then, availing of the normal-directional rotation or the reverse-directional rotation of the drum 55, the wires 57A and 57B are jointly wound on or unwound from the drum 55 to provide the wires 57A and 57B with movable force, and then, movement of the wires 57A and 57B are jointly transmitted to the carriage 15 via the upper guide wheels 58A and 58B to generate lifting or lowering movement of the carriage 15.

While the carriage 15 ascends or descends, a pair of right-left-directional swing preventive rollers 20 aligned on both sides are led to the right-left-directional guide surfaces 37 provided on both external sides, and then, a pair of front-rear-directional swing preventive rollers 21 are guided to the second external front-rear-directional guide surfaces 39. As a result, the carriage 15 can smoothly perform lifting or lowering operation without accidentally swinging itself under stable guidance of a pair of struts 12. Even when the right-left directional swing preventive rollers 20 forcibly hit against the right-left-directional guide surfaces 37 disposed outside of the right-left direction Y, by virtue of the reinforcing structure formed by rectangular shape of the corner fitting strip unit 33, distortion can hardly be generated.

In addition, stress that motivates the struts 12 to tilt themselves in the right-left direction Y at the moment of shifting the delivery instrument 16 in the right-left direction Y is securely received by the bottom frame structure 11 in addition to reinforcing structure formed by the corner fitting strips 33 projecting themselves in the right-left direction Y from the hollow body 30 of the struts 12.

Since helicoidal wire-guiding grooves are formed on the drum 55, the wires 57A and 57B are wound on and unwound from the drum 55 so that the wires 57A and 57B in the innermost layer can be wound on or unwound from the drum 55 helicoidally and automatically. Owing to guidance via helicoidal surfaces formed by surface of the innermost wires, winding of the wires can be helicoidally and automatically executed from the second inner layer on. While the drum 55 winds or unwinds the wires 57A and 57B, lateral-directional stress is generated in local domains of the wires 57A and 57B close to the drum 55.

When lateral-directional stress is generated, the lower guide wheels 60A and 60B rotatably being supported by the bearing units 64A and 64B are respectively shifted to one side affected by lateral-directional stress via a pair of stroke ball bearings 66A and 66B. In other words, lateral-directional stress causes the lower guide wheels 60A and 60B to automatically reciprocate themselves in the direction along the right-left directional axis 56. In consequence, helicoidal winding and unwinding of the wires 57A and 57B onto and from the drum 55 can be executed smoothly without obstruction. Since the lower guide wheels 60A and 60B reciprocate themselves within width of the front-rear-directional grooves 36, local portions of the wires 57A and 57B corresponding to a position higher than the lower guide rollers 60A and 60B swing themselves in the right-left direction Y inside of the front-rear grooves 36.

While being lifted or lowered, the wires 57A and 57B respectively shift themselves inside of the front-rear grooves 36 in a range from the large-diametral upper guide wheels 58A and 58B to the lower guide wheels 60A and 60B. Since external side of the front-rear grooves 36 is fully concealed by a plate cover 67, the grooves 36 are totally invisible from all directions, thus generating neat appearance. Furthermore, the external plate cover 67 prevents operators and those which are located in peripheral locations from coming into contact with the internal mechanism, and yet, even the slightest amount of oil scattered out of the swingable wires 57A and 57B can securely be shielded by a box-form cover 75 and the struts 12.

Although the movable main body 13 is apt to tilt itself towards tile elevator driver 53 of the elevator drive unit 50 because of suspension force of the wires 57A and 57B, part of tilting stress can be absorbed by load on the part of the running drive unit 70 disposed on the opposite side of the elevator driver 53.

According to the first embodiment of the invention thus far described, the elevator drive unit 50 and the running drive unit 70 are discretely installed on both sides in the right-left direction Y across the drum 55 secured to the center position. The invention however also provides such an embodiment for disposing the elevator drive unit 50 and the running drive unit 70 to optional locations.

According to the first embodiment, both the plate-form cover 67 and the box-form cover 75 have been introduced. Nevertheless, the invention also provides such an embodiment by way of dispensing with either of the plate-form cover 67 and the box-form cover 76 or the both. In the first embodiment, the lower guide rollers 60A and 60B are disposed so that they can freely reciprocate themselves in the right-left direction Y. However, the invention also provides such an embodiment by way of permitting the lower guide wheels 60A and 60B to solely rotate themselves around the supporting shaft 63 without being able to shift themselves in the right-left direction Y. Furthermore, in the first embodiment, the lower guide wheels 60A and 60B can freely and automatically reciprocate themselves in the right-left direction Y. However, the invention also provides such an embodiment to cause the lower guide wheels 60A and 60B to forcibly be shifted to the left and to the right.

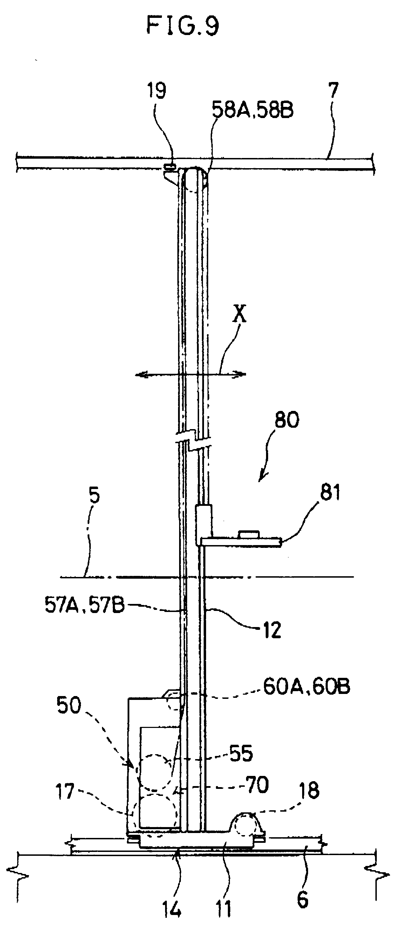

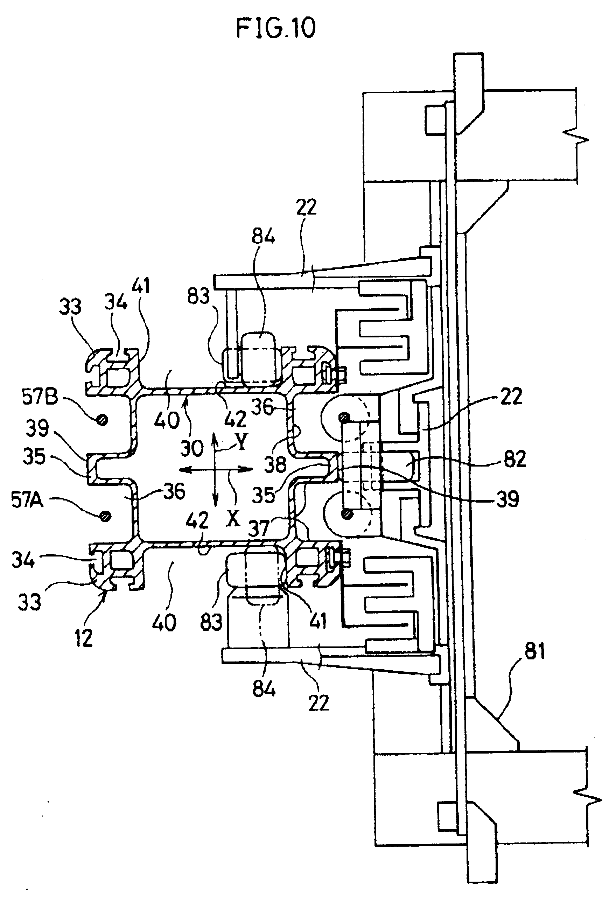

Figures 9 and 10 respectively illustrate cross-sectional views of a delivery device 80 according to the second embodiment of the invention. According to the second embodiment, the delivery device 80 merely uses a single strut 12. The strut 12 is equipped with a square hollow body 30. A plurality of rollers are secured to plural locations on the part of a carriage 81 in the vertical direction including the following; an external front-rear-directional swing preventive roller 82 to be led to the second external front-rear-directional guide surface 39; a pair of internal front-rear-directional swing preventive rollers 84 disposed in the right-left direction Y, which are respectively to be led to a pair of internal front-rear-directional guide surfaces 41; and a pair of internal right-left-directional swing preventive rollers 84 disposed in the right-left direction Y, which are respectively to be led to a pair of internal right-left-directional guide surfaces 42. In the second embodiment of the invention, the single strut 12 is nipped by the front-rear-directional swing preventive rollers 82 and 83 along the front-rear direction X and also by the internal right-left-directional swing preventive rollers 84 along the right-left direction Y.

According to the second embodiment shown in Figures 9 and 10, lifting and lowering movement of the carriage 81 is smoothly executed without accidentally swinging itself by guiding the external front-rear swing preventive roller 82 onto the second external front-rear-directional guide surface 39, by guiding the internal right-left-directional swing preventive rollers disposed in the right-left direction onto a pair of internal right-left-directional guide surfaces 41, and also by guiding the internal right-left-directional swing preventive rollers 84 disposed in the right-left direction onto a pair of internal right-left-directional guide surfaces 42. In consequence, even when the internal front-rear-directional swing preventive rollers 83 forcibly hit against a pair of front-rear-directional guide surfaces 41 outside of the right-left direction Y, owing to reinforcing structure formed by rectangular shape of a projected corner fitting strip unit 33, no distortion can be generated.

In the first and second embodiments of the invention described above, a pair of rectangular struts having long-side members 31 have been introduced to the delivery device 10 comprising a pair of struts 12 and a square strut 12 has been introduced to the delivery device 80 comprising a single strut 12. However, the invention may also provide such an embodiment by providing the former delivery device 10 with a pair of square struts 12 and by providing the latter delivery device 80 with a single rectangular strut 12 having long-side members 31. In the first and second embodiments described above, the carriage 15 is lifted and lowered by means of the elevator drive unit 50 using the wires 57A and 57B. However, the invention may also be embodied by lifting and lowering the carriage 15 by means of the elevator drive unit 50 using a plurality of endless chain units.

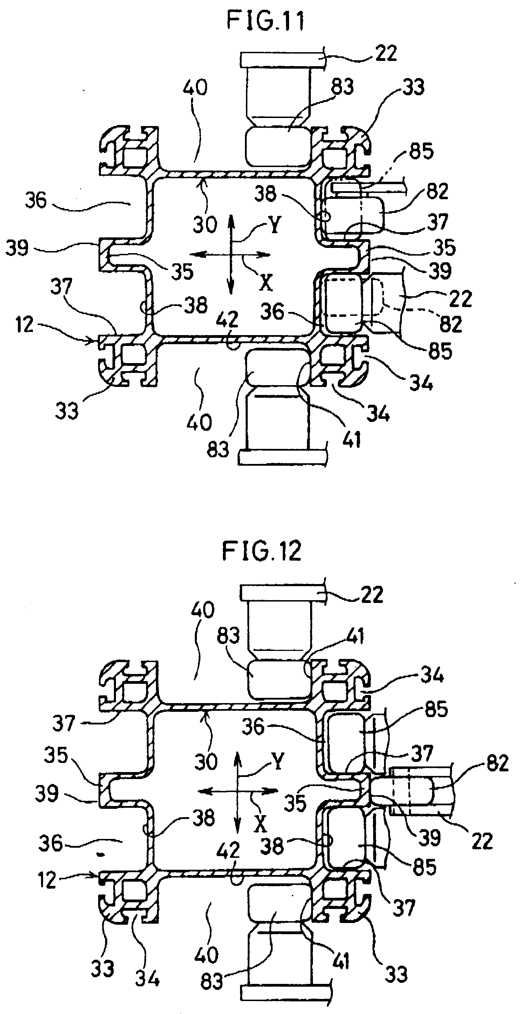

Fig. 11 illustrates the third embodiment of the invention as an exemplified variation from the preceding second embodiment shown in Figures 9 and 10. According to the third embodiment of the invention, lifting and lowering movement of the carriage 81 can be executed very smoothly without accidentally swinging itself under guidance of a strut 12 by way of guiding an external front-rear-directional swing-preventive roller 82 onto an external first front-rear-directional guide surface 38, by way of guiding an external right-left-directional swing preventive roller 85 onto an external right-left-directional guide surface 37, and also by way of guiding a pair of internal front-rear-directional swing preventive rollers 83 aligned in the right-left direction Y onto a pair of internal front-rear-directional guide surfaces 41. Even when the external right-left-directional swing preventive roller 85 forcibly hits against the external right-left-directional guide surface 37 disposed outside of the front-rear direction X, and yet, even when the internal front-rear-direction swing preventive rollers 83 forcibly hit against the internal front-rear-directional guide surfaces 41 disposed outside of the right-left direction Y, owing to reinforcing structure formed by rectangular rods of the projected corner rod unit 33, no distortion can be generated.

Fig. 12 illustrates the fourth embodiment of the invention as another exemplified variation from the second embodiment shown in Figures 9 and 10. According to the fourth embodiment, lifting and lowering movement of the carriage 81 can be executed very smoothly without accidentally swinging itself under guidance of a strut 12 by way of guiding an external front-rear-directional swing preventive roller 82 onto an external first front-rear-directional guide surface 38, by way of guiding a pair of internal front-rear-directional swing preventive rollers 85 aligned in the right-left direction Y onto a pair of internal front-rear-directional guide surfaces 37, and also by way of guiding a pair of internal right-left-directional swing preventive rollers 84 aligned in the right-left direction Y onto a pair of internal front-rear-directional guide surfaces 41.

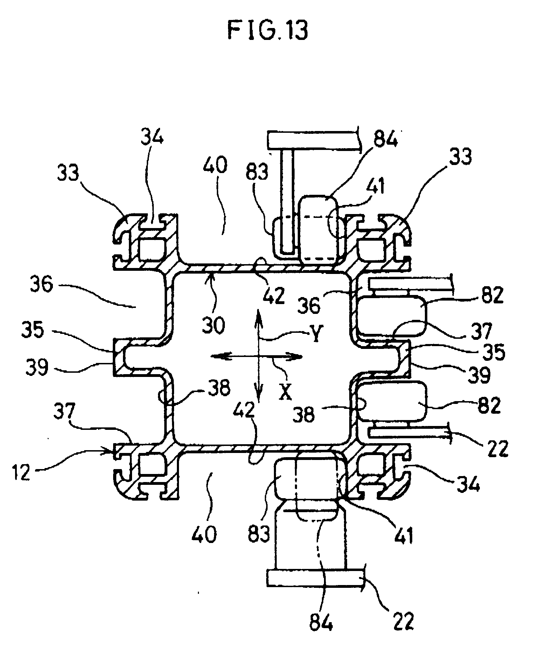

Fig. 13 illustrates the fifth embodiment of the invention as a still further exemplified variation from the second embodiment shown in Figures 9 and 10. According to the fifth embodiment, ascending and descending movement of the carriage 81 can also be executed very smoothly without accidentally swinging itself under guidance of a strut 12 by way of guiding an external front-rear swing preventive roller 82 onto an external first front-rear-directional guide surface 38, by guiding a pair of internal front-rear-directional swing preventive rollers 83 onto a pair of internal front-rear-directional guide surfaces 41, and also by way of guiding a pair of internal right-left-directional swing preventive rollers 84 aligned in right-left direction Y onto a pair of internal right-left-directional guide surfaces 42.

The first through fifth embodiments of the invention described above have respectively introduced rectangular shapes for composing the corner fitting strips 33 externally projecting themselves in the front-rear and right-left directions. However, the invention may also provide plate-form corner fitting strips 33 projecting themselves in the front-rear and right-left directions. Although the strut 12 has cross section being symmetric in the front-rear and right-left directions, the cross section may not necessarily be symmetric, but partial deformation or addition of other components to part of the strut 12 is also possible.

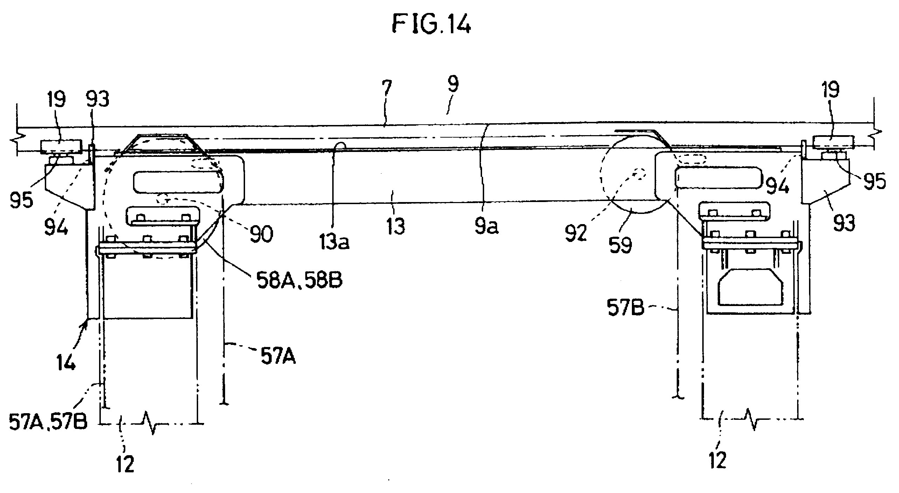

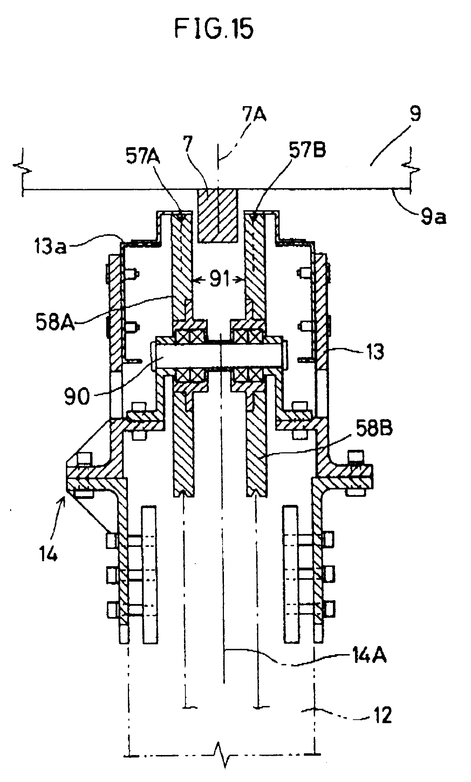

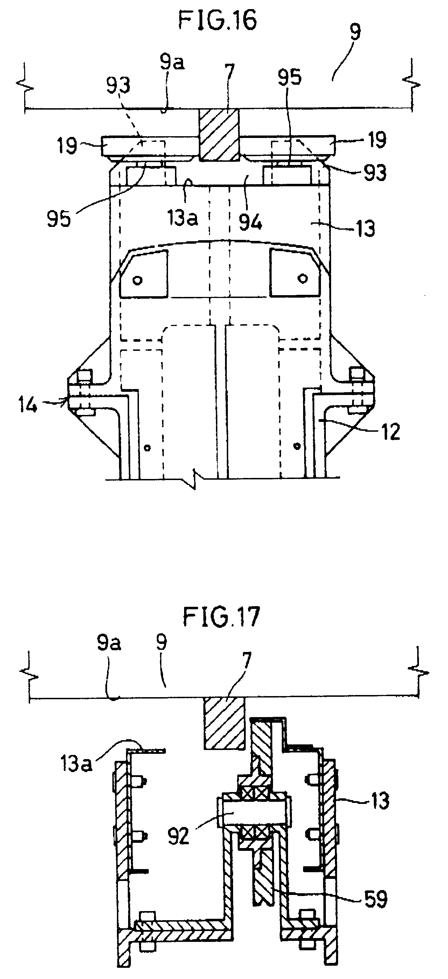

Figures 14 through 17 respectively illustrate the sixth embodiment of the delivery device according to the invention. A pair of wire units 57A and 57B led from a pair of lower guide wheels 60A and 60B respectively elongate themselves upwards before being wound on a pair of large-diametral upper guide wheels (i.e., base-side guide rollers) respectively being aligned in the right-left direction and secured to an upper frame structure 13. The large-diametral upper guide wheels 58A and 58B are rotatably secured to a shared base-side wheel-shaft 90 secured to the upper frame structure 13, where the large-diametral upper guide rollers 58A and 58B are discretely disposed to the left and to the right across the center 14A of a movable main body 14. In consequence, clearance 91 capable of accommodating a ceiling rail unit 7 is formed between internal surfaces of the opposite upper guide wheels 58A and 58B.

The large-diametral upper guide wheels 58A and 58B are respectively so disposed that the upper portions of the guide wheels slightly project themselves from the top surfaces 13a of the upper frame structure 13. Thus, the bottom surface 9a (or ceiling surface) of a beam member 9 securing the ceiling rail unit 7 thereto and the top surfaces 13a of the upper frame structure 13 can sufficiently gain access to each other.

The first wire unit 57A wound on the large-diametral upper guide diametral upper guide wheels 58A is initially elongated downward before being linked with the carriage 15. The second wire unit 57B wound on the other large-diametral upper guide wheels 58B is initially wound on a small-diametral upper guide wheel (i.e., a free-side guide wheel) 59 secured to the upper frame structure 13 on a side remote from an elevator drive unit 50. After being elongated downward, the second wire unit 57B is linked with the carriage 15.

The small-diametral upper guide wheel 59 is secured to a free-side wheel shaft 92 secured to the upper frame structure 13 by way of freely rotating itself. The upper guide wheel 59 is disposed by way of being displaced on the other side of the center 14A of the movable main body 14, in other words, being opposite from the other surface of the ceiling rail unit 7. The upper portion of the small-diametral upper guide wheel 59 also slightly projects itself from the top surface 13a of the upper frame structure 13.

A pair of fall-preventive members 93 and 93 are secured to right-left-directional both-side end surfaces of the upper frame structure 13 above the movable main body 14. Recessed clearance 94 for accommodating the ceiling rail unit 7 is formed between the both-side fall-preventive members 93 and 93 by way of upwardly being open. A pair of guide rollers 19 and 19 nipping the ceiling rail unit 7 are rotatably secured via a pair of vertical shafts 95 and 95 to the front-rear external sides of the both-side fall-preventive members 93 facing the recessed domain 94. According to the sixth embodiment of the invention shown in Figures 14 through 17, since the center 14A of the movable main body 14 correctly matches the center 7A of the ceiling rail unit 7, the delivery device 10 can easily be installed.

When the movable main body 14 moves on, the guide rollers 19 on both sides are guided to the ceiling rail unit 7 having the center 7A exactly matching the center 14A of the movable main body 14. In consequence, even when stopper action is generated as a result of intense contact of the guide rollers 19 with the ceiling rail unit 7 caused by biased load occurred in the course of inward and/or outward delivery of load by protruding a delivery instrument 16 in lateral direction for example, impact force merely concentrates onto the center portions 14A and 7A without being dispersed, and thus, the movable main body 14 can hardly incur distortion.

Furthermore, when stopper action is generated, connecting members (i.e., root portions) of the fall-preventive members 93 connected to the guide rollers 19 cannot be affected by substantial bending moment, and thus, the connection cannot be broken off. For example, even when the guide rollers 19 are damaged, the fall-preventive members 93 respectively come into contact with lateral surfaces of the ceiling rail unit 7, thus securely preventing the movable main body 14 from falling down to the left or to the right.

Since the ceiling rail unit 7 is positioned between the large-diametral upper guide wheels 58A and 58B and alongside of an end of the small-diametral guide wheel 59, the delivery device 10 can smoothly move on itself without causing the upper guide wheels 58A, 58B, and 59 to collide or come into contact with the ceiling rail unit 7.

In the sixth embodiment of the invention described above, a pair of guide rollers 19 aligned in the right-left direction are respectively secured to the corresponding fall-preventive members 93. However, the invention may also provide such an embodiment by way of discretely securing the fall-preventive members 93 and the guide rollers 19 onto upper portion of the movable main body 14.

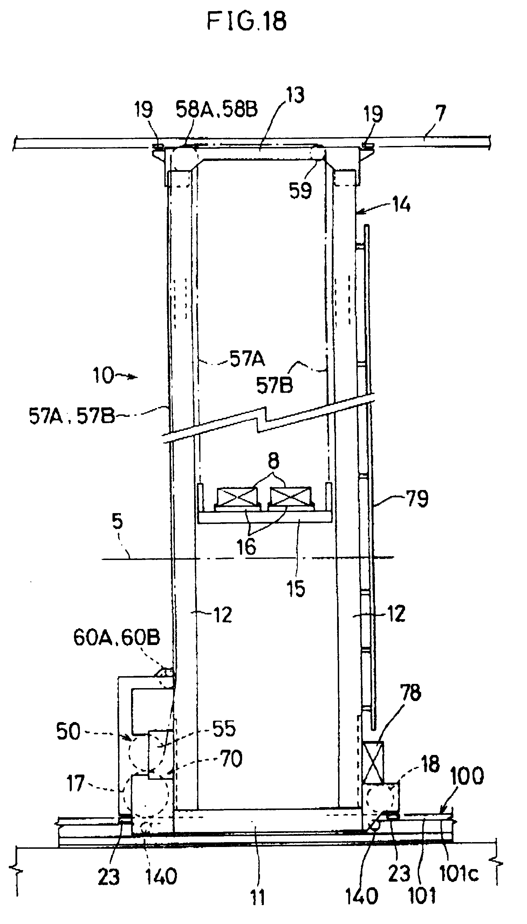

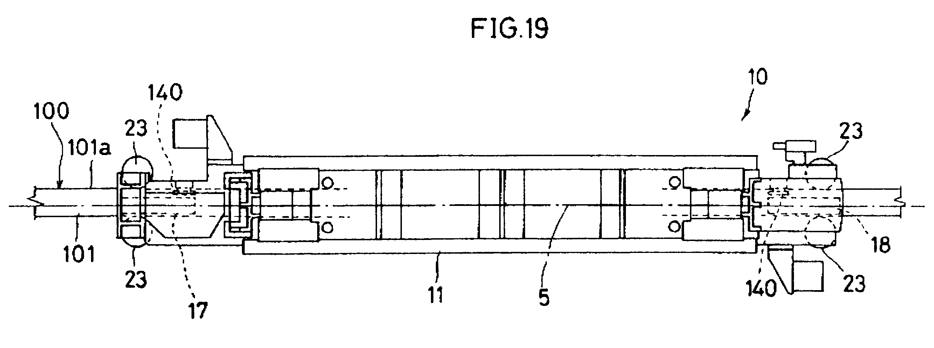

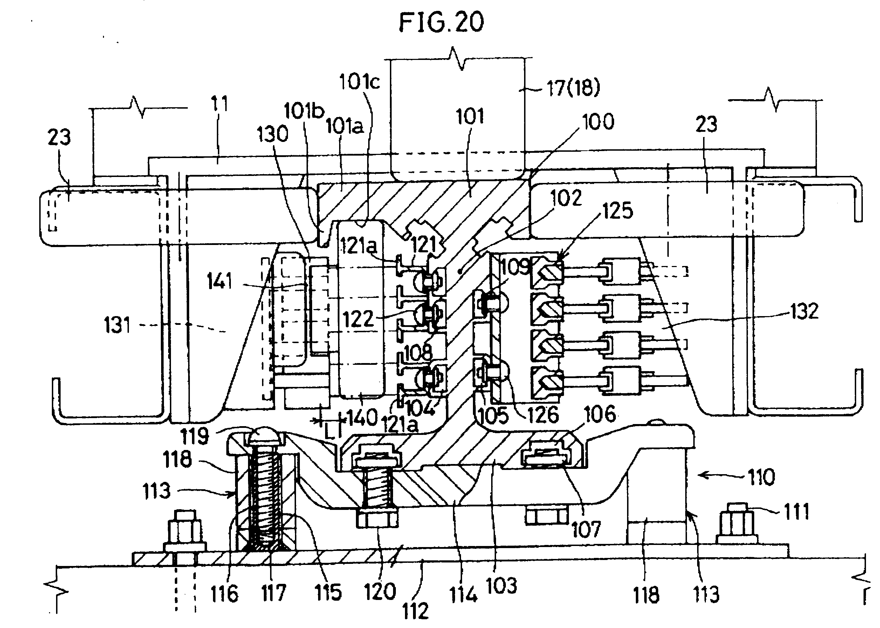

Figures 18 through 20 respectively illustrate the seventh embodiment of the invention.

A drive wheel 17 and a follower wheel 18 respectively being supported and guided by a floor rail unit 100 are discretely secured to a bottom frame structure 11 in the front and rear locations. In addition, pair of bottom guide rollers 23 respectively being guided to the floor rail unit 100 are discretely disposed in the front and rear locations.

The floor rail unit 100 has I-shaped cross section formed by the following; an upper flange 101 permitting the drive and follower wheels 17 and 18 to come into contact therewith from the upper portion and the bottom guide rollers 23 to respectively face therewith from both sides; a web member 102 installed in the vertical direction; and a bottom flange 103. A plurality of fixing members 104 and 105 each being provided with dovetail-groove-form opening one side are projectively set to both-side surfaces of the web member 102 in the vertical direction. A pair of recessed dovetail-groove-form coupling members 106 open to the bottom are respectively formed in the right-left direction on the bottom surface of the bottom flange 103. The floor rail unit 100 is produced by molding aluminium for example. The fixing members 104 and 105 and the coupling members 106 are integrally molded in the course of molding the floor rail unit 100.

One of surfaces of the upper flange 101 of the floor rail unit 100 is formed into a projected flange 101a outwardly projecting itself beyond a predetermined range for securing detectable objects to be described later on. A downwardly extended jut member 101b is formed on a side edge of the projected flange 101a. The side edge of the projected flange 101a is formed by way of externally protruding itself by a predetermined length L from the side edge of the bottom flange 103. The bottom surface of the projected flange 101a being the inside surface of the downwardly extended jut member 101b is formed to serve itself as a fall-preventive roller receptive surface 101c.

The floor rail unit 100 consisting of the above structural components is secured on floor via a plurality of floor-rail supporting units 110 installed on floor at predetermined intervals. Each floor-rail supporting unit 110 consists of an anchor base 112 secured on floor via an anchor bolt 111 and a bracket 114 disposed on the anchor base 112 via a connector 113 capable of adjusting vertical position by operating screw means. The floor rail unit 100 is secured on the bracket 114.

A plurality of connectors 113 respectively incorporate a cylindrical body 115 erected on the anchor base 112, where a pair of cylindrical bodies 115 are aligned in the right-left direction. External threads 116 and internal threads 117 are formed in each cylindrical body 115. The bracket 114 is secured on a pair of nut bodies 118 screwedly coupled with each external threads 116. Each bolt 119 is downwardly coupled with a corresponding bolt-hole formed at an end of the bracket 114 by screwedly being engaged with the internal threads.

When building up the above structure, initially, the bracket 114 is mounted on the corresponding nut bodies 118, and then the corresponding bolts 119 are downwardly inserted in the respective bolt-holes to be coupled with the internal threads 117 by a predetermined amount. Next, the nut bodies 118 coupled with external threads 116 are shifted upwards, and then the bracket 114 is nipped by heads of the bolts 119 and the nut bodies 118. In consequence, the bracket 114 is secured at a predetermined height level against floor surface by means of respective connectors 113. A pair of plate-nuts 107 are inserted in a pair of junction domains 106 in the bottom of the floor rail unit 100. A pair of bolts 120 are upwardly inserted in corresponding bolt holes formed in the intermediate portions of the bracket 114. The floor rail unit 100 is eventually secured on the bracket 114 after securely coupling the bolts 120 with the corresponding plate nuts 107.

Likewise, plate nuts 108 and 109 are respectively inserted in the fixing members 104 and 105 formed on both-side surfaces of the web member 102. Thus, each run-control detectable object 121 facing a side surface of the web member 102 can be secured to a side surface of the web member 102 by screwably coupling a bolt 122 with the corresponding plate nut 108. A plurality of power-supply units 125 respectively facing surface on the other side of the web member 102 can be secured to the other-side surface thereof by screwably coupling respective bolts 126 with corresponding plate nuts 109 by externally inserting the bolts 126 therein.

The run-control detectable object 121 has L-shaped transverse section. After externally inserting the bolt 122 in a corresponding bolt hole formed on a side of the detectable object 121, the bolt 122 is screwably coupled with the plate nut 108 before securing the detectable object 121 to lateral surface of the floor rail unit 100. A vertical-directional broad-width domain is formed on a free end-surface of horizontal plane of the detectable object 121. Availing of external surface of the vertical-directional broad-width domain, a detectable surface 121a is formed by way of facing one side. The detectable object 121 is used for discontinuing high-speed and medium-speed run and for setting a predetermined position, where the detectable object 121 is secured to a predetermined position in the lengthwise direction of the floor rail unit 100.

A run-control detection device 130 is installed below the bottom frame structure 11 and the bottom guide roller 23. The detection device 130 freely faces the detectable surface 121a from lateral surface. The detection device 130 consists of a limited reflection type photoelectric tube unit for example, which is installed to inner surface of a bracket 131 secured to the bottom frame structure 11 by way of freely adjusting own position in lateral direction. A current collector unit 132 is disposed below the delivery device 10. A plurality of collector elements of the current collector unit 132 are disposed in vertical alignment in order that they can slidably come into contact with corresponding rails of the power-supply unit 125.

A pair of fall-preventive roller 140 are provided near a pair of wheels 17 and 18 and below the delivery device 10, where the fall-preventive rollers 140 freely rotate themselves by way of freely coming into contact with the projected flange 101a from the bottom side. Concretely, a pair of right-left-directional roller shafts 141 are provided in the front and rear positions and on the part of the bottom frame structure 11. The fall-preventive rollers 140 are respectively secured to these roller shafts 141. The fall-preventive rollers 140 are so disposed that they can freely come into contact with the fall-preventive roller receptive surface 101c from the bottom side.

According to the seventh embodiment shown in Figures 18 through 20, running operation of the delivery device 10 can be executed very smoothly and stably in that the wheels 17 and 18 are supportedly led to the upper surface of the upper flange 101 and the lower guide rollers 23 are guided to right-left side surfaces of the upper flange 101. Furthermore, delivery of power and control signal to the delivery device 10 can smoothly be executed by causing a plurality of collector elements of the current collector unit 132 to slidably come into contact with corresponding rails of the power-supply unit 125. Furthermore, control of running operation of the delivery device 10 such as suspension of high-and-medium speed run and fixing of the delivery device at a predetermined position can properly be executed by causing the detection device 130 to detect the detectable surface 121a of the detectable object 121.

Since the projected flange 101a is disposed above and outside of the detectable surface 121a of the detectable object 121, dust of worn elements of the wheels 17/18 and the lower guide rollers 23 caused by their rotation or suspending dust fell from the top of the automated warehouse can hardly adhere to the detectable surface 121a, in other words, the detectable surface 121a can hardly be stained by dust.

As a result, the detectable surface 121a can maintain cleanness for a long while. This in turn permits the detection device 130 to precisely detect the detectable surface 12a all the time, and thus, the system operation including running of the delivery device can correctly and stably be controlled.

Furthermore, straight flow of dust from side edges of the projected flange 101a onto the detectable surface 12a can securely be prevented by the downwardly extended jut member 101b formed on the side edges of the projected flange 101a, thus inhibiting suspending dust from easily gaining access to the detectable surface 121a

Furthermore, since the side edge of the projected flange 101a outwardly protrudes beyond the side edge of the lower flange 103, dust passed by side edges of the projected flange 101a can hardly deposit on the bottom flange 103, thus preventing dust on the bottom flange 103 from suspending upward to adhere to or deposit on the detectable surface 121a.

In the event that either of the wheels 17 and 18 is about to float itself from the floor rail unit 100 on receipt of impact stress generated by acceleration, deceleration, high-speed run, or sudden stop of the running operation of the delivery device in emergency, the fall-preventive rollers 140 disposed near the wheels 17 and 18 quickly come into contact with the fall-preventive roller receptive surface 101c from the bottom side, thus effectively preventing the wheels 17 and 18 from floating themselves to eventually prevent the delivery device 10 itself from running off the route or incurring overturn.

According to the seventh embodiment shown in Figures 18 through 20, a downwardly extending rod member 101b is formed on the side edge of the projected flange 101a. However, the invention may also provide such a floor rail unit 100 dispensing with the downwardly extended rod member 101b. The seventh embodiment of the invention provides side edge portion of the projected flange 101a by way of outwardly protruding beyond side edge of the bottom flange 103. The invention may also provide such a floor rail unit 100 that disposes the side edge portion of the projected flange 101a at an inward position from the side edge of the bottom flange 103. Although the seventh embodiment has introduced a detection device 130 comprising a limited reflection type photoelectric tube unit, the detection device 130 may also comprise a normal reflection type photoelectric tube unit.

## Claims

1. A delivery device (10) for use with an automated warehouse, comprising
a moveable main body (14) consisting of a bottom frame structure (11) and at least one strut (12) erected on said bottom frame structure (11),
a carriage (15) capable of freely ascending and descending itself along one-side surfaces of said strut (12) and moveable together with said moveable main body (14) in the front-rear-direction (X) corresponding to the travelling direction of said moveable main body (14),
an elevator drive unit (50) for winding and unwinding wires disposed at a lower part of the other-side surface o9f the strut (12) in order to link a pair of wires (57A, 57B) stretched from the elevator drive unit (50) to the carriage (15) via a plurality of upper guide wheels (58A, 58B) provided at the top portion of the moveable main body (14),
a pair of front and rear grooves (36) formed in the vertical direction at least on the other-side surfaces of the strut (12), and
a pair of lower guide wheels (60A, 60B) provided at the elevator drive unit (50),
**characterized in that** the wires (57A,57B) stretched between the upper and lower guide wheels (58A, 58B and 60A, 60B) are respectively positioned inside of said front and rear grooves (36).

2. A delivery device (10) for use with an automated warehouse as set forth in Claim 1, wherein the elevator drive unit (50) comprises a drum (55) arranged to be rotatable on a right-and-left-directional axis (56) being orthogonal to the front-and-rear direction (X) in order that the wires (57A, 57B) elongated from the drum (55) are respectively linked to the carriage (15) via the upper guide wheels (58A, 58B) disposed on the top portion of the movable main body (14), and lower guide wheels (60A, 60B) disposed to be freely movable in the direction along the right-and-left-directional axis (56).

3. A delivery device (10) for use with an automated warehouse as set forth in Claim 2, comprising a plurality of bearings (64A, 64B) disposed between the lower guide wheels (60A, 60B) and supporting shafts (63) thereof in order that the lower guide wheels (60A, 60B) can reciprocate themselves in the direction along the right-and-left directional axis thereof by applying a lateral-directional force of the wires (57A, 57B) generated at the time when the drum (55) winds or unwinds the wires (57A, 57B).

4. A delivery device (10) for use with an automated warehouse as set forth in any of Claims 1 through 3, comprising a cover (67) set to one side of the struts (12) in order to externally conceal the wires (57A, 57B) in a range from the lower guide wheels (60A, 60B) to the elevator drive unit (50).

5. A delivery device (10) for use with an automated warehouse as set forth in any of Claims 1 through 4, comprising a cover (67) set to one side of the struts (12) in order to externally conceal the front-and-rear directional grooves (36).

6. A delivery device (10) for use with an automated warehouse as set forth in any of Claims 1 through 5, wherein the bottom frame structure (11) has a pair of running wheels (17, 18) supported and guided by a floor rail unit (16), the elevator drive unit (50) consists of a drum (55) being opposite from the struts (12) and an elevator drive unit (50) disposed on one side of the drum (55) in the right-and-left direction (Y), and a running drive unit (70) linked to the running wheels (17) is disposed on the other side of the drum (55) in the right-and-left direction (Y).

7. A delivery device (10) use with an automated warehouse as set forth in any of Claims 1 through 6, comprising a pair of struts (12) disposed in the front-and-rear direction (X), a carriage (15) disposed between the struts (12), and a plurality of wires (57A, 57B) discretely linked to the carriage (15) by way of being separated into the front and rear directions (X).

8. A delivery device (10) for use with an automated warehouse as set forth in any of Claims 1 through 7, comprising a single strut (12) and at least a single wire.

9. A delivery device (10) for use with an automated warehouse as set forth in any of Claims 1 through 8, wherein the strut (12) has a rectangular cross section and a pair of right-and-left directional front-and-rear grooves (36) are formed on the other side surface of the strut (12) in the vertical direction, further comprising a pair of right-and-left grooves (40) formed on both right-and-left-directional side surfaces in the vertical direction, a pair of right-and-left-directional guide surfaces (37) formed from the right-and-left surfaces of the pair of front-and-rear grooves (36) for prevention of right-and-left-directional swings of the strut (12), a plurality of front-and-rear-directional guide surfaces (41) formed from the front-and-rear-directional surfaces of the right-and-left grooves (40) for prevention of front-and-rear directional swings of the strut (12), and corners formed as rectangular fitting strip members (33) accommodating the right-and-left-directional guide surfaces (37) and the front-and-rear-directional guide surfaces (41).

10. A delivery device for use with an automated warehouse as set forth in any of Claims 1 through 9, wherein a plurality of wires (57A, 57B) elongated from the elevator drive unit (50) are respectively wound on a plurality of right-and-left guide wheels (58A, 58B) disposed above the movable main body (14) and then linked to the carriage unit (15), said guide wheels (58A, 58B) being discretely disposed on respective right and left sides of the center of the movable main body (14), a clearance substantial enough to accommodate a ceiling rail unit (7) formed between the right-side and left-side guide wheels (58A, 58B) and a pair of right and left guide rollers (19) for nipping the ceiling rail unit (7) and a plurality of fall-preventive members capable of accommodating the ceiling rail unit (7), respectively being provided on the upper portion of the movable main body (14).

11. A delivery device (10) for use with an automated warehouse as set forth in Claim 10, wherein the pair of struts (12) are disposed in the front-and-rear direction (X) and linked at the upper ends by means of an upper frame structure (13), the carriage (15) is disposed between the struts (12), a pair of right-and-left wires (57A, 57B) are respectively wound on a pair of right and left base-side guide wheels (58A, 58B) set to the upper frame structure (13) on the side of the elevator drive unit (50), the right-and-left-directional wire (57A) is linked with the carriage (15) whereas the other right-and-left-directional wire (57B) is wound on a free-side guide wheel (59) set to the upper frame structure (13) on a side remote from the elevator drive unit (50) and then linked to the carriage unit (15), a clearance is formed between the base-side guide wheels (58A, 58B), and the free-side guide wheel (59) is disposed at the other side with respect to the center of the movable main body (14).

12. A delivery device (10) for use with an automated warehouse as set forth in Claim 10, comprising a single strut arranged to connect a plurality of wires from a plurality of guide wheels to the carriage (15).

13. A delivery device (10) for use with an automated warehouse as set forth in any of Claims 10 through 12, comprising a pair of right-and-left guide rollers (19) re to the fall-preventive members (93).

14. A delivery device (10) for use with an automated warehouse as set forth in any of Claims 1 through 13, wherein the delivery device (10) is capable of freely running itself on a predetermined route (5) by means of a plurality of running wheels (17,18) respectively being supported and guided by a floor rail unit (6) having an I-shaped cross section, comprising a plurality of detectable objects (121) each having a detectable surface (121a) facing laterally and secured to a lateral surface of a web portion (102), a projective flange member (101a) formed from one side of the upper frame structure (101) to be outwardly projecting itself outside of a range in which the detectable objects are set, and a running-control detection device (130) capable of freely facing laterally each of the detectable surface (121a) and a plurality of fall-preventive rollers (140) capable of freely coming into contact with the projective flange member (101a) from below, respectively being provided below the delivery device (10).

15. A delivery device (10) for use with an automated warehouse as set forth in Claim 14, comprising a downwardly extended jut member (101b) formed along the side edge of the projective flange member (101a).

16. A delivery device (10) for use with an automated warehouse as set forth in Claim 14 or 15, comprising a side edge of the projective flange member (101a) outwardly protruding itself further outside the side edge of the lower flange member (103).

## Patentansprüche

1. Handhabungsvorrichtung (10) für eine automatische Warenhausanordnung mit
einem bewegbaren Grundkörper (14), bestehend aus einem unteren Rahmen (11) und wenigstens einer auf dem unteren Rahmen (11) aufrecht stehenden Säule (12),
einem Aufzug (15), welcher entlang einer Seite der Säule (12) anhebbar und absenkbar ist und zusammen mit dem Grundkörper (14) in einer Richtung (X), entsprechend der Bewegungsrichtung des Grundkörpers (14), vor und zurück bewegbar ist,
einer Aufzugsantriebseinheit (50) zum Auf- und Abwickeln von Kabeln an dem unteren Teil der anderen Seite der Säule (12), um ein Kabelpaar (57A, 57B) zu verbinden, welches sich von der Aufzugsantriebseinheit (50) zu dem Aufzug (15) erstreckt und über mehrere obere Führungsrollen (58A, 58B) am oberen Abschnitt des bewegbaren Grundkörpers (14) geführt ist,
einem Paar vorderer und hinterer Ausnehmungen (36), welche in vertikaler Richtung an wenigstens der anderen Seite der Säule (12) ausgebildet sind, und
einem Paar unterer Führungsrollen (60A, 60B) an der Aufzugsantriebseinheit (50),
dadurch gekennzeichnet, daß
die sich zwischen den oberen und unteren Führungsrollen (58A, 58B und 60A, 60B) erstreckenden Kabel (57A, 57B) in den zugeordneten vorderen und hinteren Ausnehmungen (36) angeordnet sind.

2. Handhabungsvorrichtung (10) für eine automatische Warenhausanordnung nach Anspruch 1, dadurch gekennzeichnet, daß die Aufzugsantriebseinheit (50) eine Trommel (55) aufweist, welche um eine in Rechts-Links-Richtung und rechtwinkelig zur Vor- und Rückwärtsbewegungsrichtung (X) angeordnete Achse (56) drehbar ist, wobei die von der Trommel (55) ausgehenden Kabel (57A, 57B) jeweils mit dem Aufzug (15) verbunden und dabei über obere Führungsrollen (58A, 58B), welche an dem oberen Abschnitt des bewegbaren Grundkörpers (14) angeordnet sind, und untere Führungsrollen (60A, 60B), welche in Rechts-Links-Richtung frei beweglich auf der Achse (56) angeordnet sind, geführt sind.

3. Handhabungsvorrichtung (10) für eine automatische Warenhausanordnung nach Anspruch 2, dadurch gekennzeichnet, daß zwischen den unteren Führungsrollen (60A, 60B) und den sie tragenden Wellen (63) mehrere Wellenlager (64A, 64B) angeordnet sind, um ein Hin- und Herbewegen der unteren Führungsrollen (60A, 60B) auf der in Rechts-Links-Richtung ausgerichteten Achse zu ermöglichen, wenn beim Auf- und Abrollen der Kabel (57A, 57B) auf die Trommel (55) durch die Kabel (57A, 57B) hervorgerufene Seitenkräfte auftreten.

4. Handhabungsvorrichtung (10) für eine automatische Warenhausanordnung nach einem der Ansprüche 1 bis 3, dadurch gekennzeichnet, daß auf einer Seite der Säulen (12) eine Abdeckung (67) aufgesetzt ist, um die Kabel (57A, 57B) in dem Bereich von den unteren Führungsrollen (60A, 60B) bis zu der Aufzugsantriebseinheit (50) nach außen hin abzudecken.

5. Handhabungsvorrichtung (10) für eine automatische Warenhausanordnung nach einem der Ansprüche 1 bis 4, dadurch gekennzeichnet, daß eine auf eine Seite der Säulen (12) aufgesetzte Abdeckung (67) die in Richtung vorne-hinten ausgerichteten Ausnehmungen (36) nach außen hin abdeckt.

6. Handhabungsvorrichtung (10) für eine automatische Warenhausanordnung nach einem der Ansprüche 1 bis 5, dadurch gekennzeichnet, daß der untere Rahmen (11) ein Paar von einer Bodenschiene (6) gestützten und geführten Laufräder (17,18) aufweist, daß die Aufzugsantriebseinheit (50) eine den Säulen (12) gegenüberliegend angeordnete Trommel (55) umfaßt, daß die Aufzugsantriebseinheit (50) in der Rechts-Links-Richtung (Y) auf der einen Seite der Trommel (55) angeordnet ist, und daß die mit den Laufrädern (17) verbundene Fahrantriebseinheit (70) in der Rechts-Links-Richtung (Y) auf der anderen Seite der Trommel (55) angeordnet ist.

7. Handhabungsvorrichtung (10) für eine automatische Warenhausanordnung nach einem der Ansprüche 1 bis 6, dadurch gekennzeichnet, daß in Vor-Zurück-Richtung (X) ein Paar Säulen (12) angeordnet ist, daß sich der Aufzug (15) zwischen den Säulen (12) befindet und mehrere Kabel (57A, 57B) getrennt voneinander und in Vor-Zurück-Richtung voneinander beabstandet mit dem Aufzug (15) verbunden sind.

8. Handhabungsvorrichtung (10) für eine automatische Warenhausanordnung nach einem der Ansprüche 1 bis 7, gekennzeichnet durch eine einzelne Säule (12) und wenigstens ein Kabel.

9. Handhabungsvorrichtung (10) für eine automatische Warenhausanordnung nach einem der Ansprüche 1 bis 8, dadurch gekennzeichnet, daß die Säule (12)
• einen rechteckigen Querschnitt aufweist,
• auf der anderen Seite in vertikaler Richtung ein Paar rechts-links ausgerichteter, vorderer und hinterer Ausnehmungen (36) umfaßt,
• auf der rechten und linken Seite ein Paar vertikal verlaufender rechter und linker Ausnehmungen (40) vorgesehen ist,
• ein Paar rechts-links ausgerichteter Führungsflächen (37) aufweist, welche durch die rechten und linken Flächen des vorderen und hinteren Ausnehmungspaares (36) gebildet sind, um Schwingungen der Säule (12) in Rechts-Links-Richtung zu verhindern,
• mehrere vordere und hintere Führungsflächen (41) beinhaltet, gebildet durch die vorderen und hinteren Flächen der Ausnehmungen (40), um Schwingungen der Säule (12) nach vorne und hinten zu verhindern, und
• rechteckige Vorsprünge (33) Ecken bilden, welche die rechten und linken Führungsflächen (37) sowie die vorderen und hinteren Führungsflächen (41) beinhalten.

10. Handhabungsvorrichtung (10) für eine automatische Warenhausanordnung nach einem der Ansprüche 1 bis 9, dadurch gekennzeichnet, daß mehrere, von der Aufzugsantriebseinheit (50) wegführende Kabel (57A, 57B) über mehrere rechte und linke, auf dem beweglichen Grundkörper (14) angeordnete Führungsrollen (58A, 58B) geleitet und dann mit dem Aufzug (15) verbunden sind, daß die Führungsrollen (58A, 58B) getrennt voneinander rechts und links der Mitte des bewegbaren Grundkörpers (14) angeordnet sind, daß zwischen den rechten und den linken Führungsrollen (58A, 58B) ein ausreichender Abstand zur Unterbringung einer Deckenschiene (7) vorhanden ist, daß ein Paar rechter und linker Führungswalzen (19) in Kontakt mit der Deckenschiene (7) steht, und daß mehrere, an die Deckenschiene (7) umgreifende und im oberen Abschnitt des bewegbaren Grundkörpers (14) angeordnete Umkippsicherungen vorgesehen sind.

11. Handhabungsvorrichtung (10) für eine automatische Warenhausanordnung nach Anspruch 10, dadurch gekennzeichnet, daß das Paar Säulen (12) in der Vor-Zurück-Richtung (X) angeordnet und an den oberen Enden mit Teilen eines oberen Rahmens (13) verbunden ist, daß der Aufzug (15) zwischen den Säulen (12) angeordnet ist, daß ein Paar rechter und linker Kabel (57A, 57B) jeweils trägerseitig über ein Paar rechter und linker Führungsrollen (58A, 58B) geführt ist, welche auf dem oberen Rahmen auf der Seite der Aufzugsantriebseinheit (50) angeordnet sind, daß das von rechts nach links verlaufende Kabel (57A) mit dem Lift (15) verbunden ist, während das andere von rechts nach links verlaufende Kabel (57B) über die unabhängige Führungsrolle (59) geführt und dann mit dem Aufzug (15) verbunden ist, wobei die Führungsrolle (59) auf der der Aufzugsantriebseinheit (50) entfernten Seite auf dem oberen Rahmen (13) angeordnet ist, und daß zwischen den säulenseitigen Führungsrollen (58A, 58B) und der in Bezug auf die Mitte des Grundkörpers (14) auf der anderen Seite angeordnete freien Führungsrolle (59) ein Abstand vorhanden ist.

12. Handhabungsvorrichtung (10) für eine automatische Warenhausanordnung nach Anspruch 10, gekennzeichnet durch eine einzelne Säule, welche die Verbindung mehrerer Kabel mit dem Aufzug (15) unter Einsatz mehrerer Führungsrollen ermöglicht.

13. Handhabungsvorrichtung (10) für eine automatische Warenhausanordnung nach einem der Ansprüche 10 bis 12, gekennzeichnet durch ein Paar rechter und linker Führungsrollen (19) an den Umkippsicherungen (93).

14. Handhabungsvorrichtung (10) für eine automatische Warenhausanordnung nach einem der Ansprüche 1 bis 13, dadurch gekennzeichnet, daß die Handhabungsvorrichtung (10) entlang einer vorgegebenen Route (5) mittels mehrere Laufräder, welche durch eine Bodenschiene (6) mit einem doppel-T-förmigen Querschnitt getragen und gestützt werden, frei beweglich ist, daß Fühler (121) mit je einer seitlichen Fühlerfläche (121a) vorgesehen und an der Seitenfläche eines Steges (102) angeordnet sind, daß ein an einer Seite des oberen Flansches (101) angeformter, vorstehender Flanschteil (101a) bis in den Bereich der zu erfassenden Teile hinaussteht, daß eine Bewegungserfassungseinrichtung (130) seitlich unbehindert gegenüber der Fühlerfläche (121a) angeordnet ist, und daß mehrere Walzen (140) zur Kippsicherung vorgesehen sind, welche sich ungehindert von unten her an den vorstehenden Flanschteil (101a) anlegen können und unter der Handhabungsvorrichtung (10) angeordnet sind.

15. Handhabungsvorrichtung (10) für eine automatische Warenhausanordnung nach Anspruch 14, gekennzeichnet durch einen nach unten gerichteten Vorsprung (101b), welcher entlang dem Seitenrand des vorstehenden Flanschteiles (101a) ausgebildet ist.

16. Handhabungsvorrichtung (10) für eine automatische Warenhausanordnung nach Anspruch 14 oder 15, dadurch gekennzeichnet, daß der Seitenrand des vorstehenden Flanschteiles (101a) zusätzlich den Seitenrand des unteren Flansches (103) nach außen hin überragt.

## Revendications

1. Dispositif de manutention (10) destiné à être utilisé avec un entrepôt automatisé, comportant
un corps principal mobile (14) comportant une structure de châssis inférieur (11) et au moins un montant (12) dressé sur ladite structure de châssis inférieur (11),
un chariot (15) capable de monter et descendre librement lui-même le long des surfaces d'un premier côté dudit montant (12) et mobile en même temps que ledit corps principal mobile (14) dans la direction avant-arrière (X) correspondant à la direction de déplacement dudit corps principal mobile (14),
une unité d'entraînement d'élévateur (50) pour enrouler et dérouler des câbles disposés à la partie inférieure de la surface de l'autre côté du montant (12) afin de relier une paire de câbles (57A, 57B) étirés à partir de l'unité d'entraînement d'élévateur (50) au chariot (15) via une pluralité de roues de guidage supérieures (58A, 58B) agencées au niveau de la partie supérieure du corps principal mobile (14),
une paire de gorges avant et arrière (36) formées dans la direction verticale au moins sur les surfaces de l'autre côté du montant (12), et
une paire de roues de guidage inférieures (60A, 60B) agencées au niveau de l'unité d'entraînement d'élévateur (50),
caractérisé en ce que les câbles (57A, 57B) étirés entre les roues de guidage supérieures et inférieures (58A, 58B et 60A, 60B) sont respectivement positionnés à l'intérieur desdites gorges avant et arrière (36).

2. Dispositif de manutention (10) destiné à être utilisé avec un entrepôt automatisé selon la revendication 1, dans lequel l'unité d'entraînement d'élévateur (50) comporte un tambour (55) agencé pour être rotatif sur un axe (56) de direction droite-gauche et qui est orthogonal à la direction avant-arrière (X) afin que les câbles (57A, 57B) étirés à partir du tambour (55) sont respectivement reliés au chariot (15) via les roues de guidage supérieures (58A, 58B) disposées sur la partie supérieure du corps principal mobile (14), et les roues de guidage inférieures (60A, 60B) disposées pour être mobiles librement dans la direction s'étendant le long de l'axe (56) de direction droite-gauche.

3. Dispositif de manutention (10) destiné à être utilisé avec un entrepôt automatisé selon la revendication 2, comportant une pluralité de paliers (64A, 64B) disposés entre les roues de guidage inférieures (60A, 60B) et des arbres de support (63) de celles-ci afin que les roues de guidage inférieures (60A, 60B) puissent se déplacer elles-mêmes en va-et-vient dans la direction s'étendant le long de l'axe de direction droite-gauche de celles-ci en appliquant une force de direction latérale des câbles (57A, 57B) produite au moment ou le tambour (55) enroule ou déroule les câbles (57A, 57B).

4. Dispositif de manutention (10) destiné à être utilisé avec un entrepôt automatisé selon l'une quelconque des revendications 1 à 3, comportant un couvercle (67) établi sur un côté des montants (12) afin de cacher extérieurement les câbles (57A, 57B) dans une plage allant des roues de guidage inférieures (60A, 60B) jusqu'à l'unité d'entraînement d'élévateur (50).

5. Dispositif de manutention (10) destiné à être utilisé avec un entrepôt automatisé selon l'une quelconque des revendications 1 à 4, comportant un couvercle (67) établi sur un côté des montants (12) afin de cacher extérieurement les gorges (36) de direction avant-arrière.

6. Dispositif de manutention (10) destiné à être utilisé avec un entrepôt automatisé selon l'une quelconque des revendications 1 à 5, dans lequel la structure de châssis inférieur (11) comporte une paire de roues de roulement (17, 18) supportées et guidées par une unité formant rail de sol (6), l'unité d'entraînement d'élévateur (50) comportant un tambour (55) situé en vis-à-vis des montants (12), et une unité d'entraînement d'élévateur (50) disposée sur un premier côté du tambour (55) dans la direction droite-gauche (Y), et une unité d'entraînement de roulement (70) reliée aux roues de roulement (17) est disposée sur l'autre côté du tambour (55) dans la direction droite-gauche (Y).

7. Dispositif de manutention (10) destiné à être utilisé avec un entrepôt automatisé selon l'une quelconque des revendications 1 à 6, comportant une paire de montants (12) disposés dans la direction avant-arrière (X), un chariot (15) disposé entre les montants (12) et une pluralité de câbles (57A, 57b) reliés de manière discrète au chariot (15) d'une manière étant séparée dans la direction avant-arrière (X).

8. Dispositif de manutention (10) destiné à être utilisé avec un entrepôt automatisé selon l'une quelconque des revendications 1 à 7, comportant un seul montant (12) et au moins un seul câble.

9. Dispositif de manutention (10) destiné à être utilisé avec un entrepôt automatisé selon l'une quelconque des revendications 1 à 8, dans lequel le montant (12) a une section transversale rectangulaire et une paire de gorges avant et arrière (36) dans la direction droite-gauche sont formées sur l'autre surface latérale du montant (12) dans la direction verticale, comportant de plus une paire de gorges droite et gauche (40) formées sur la paire de surfaces latérales de direction droite-gauche dans la direction verticale, une paire de surfaces de guidage dans la direction droite-gauche (37) formées à partir des surfaces droite et gauche la paire de gorges avant et arrière (36) pour empêcher des basculements dans la direction droite-gauche du montant (12), une pluralité de surfaces de guidage dans la direction avant-arrière (41) formées à partir des surfaces dans la direction avant-arrière des gorges droite et gauche (40) pour empêcher des basculements dans la direction avant-arrière du montant (12), et des coins formés en tant qu'éléments (33) formant bande d'agencement rectangulaire adaptés aux surfaces de guidage dans la direction droite-gauche (37) et les surfaces de guidage dans la direction avant-arrière (41).

10. Dispositif de manutention destiné à être utilisé avec un entrepôt automatisé selon l'une quelconque des revendications 1 à 9, dans lequel une pluralité de câbles (57A, 57B) étirés à partir de l'unité d'entraînement d'élévateur (50) sont respectivement enroulés sur une pluralité de roues de guidage droite et gauche (58A, 58B) disposées au-dessus du corps principal mobile (14) et ensuite reliés à l'unité de chariot (15), lesdites roues de guidage (58A, 58B) étant disposées de manière séparée sur les côtés droit et gauche respectifs du centre du corps principal mobile (14), un jeu suffisamment important pour recevoir une unité de rail de plafond (7) étant formé entre les roues de guidage côté droit et côté gauche (58A, 58B) et une paire de rouleaux de guidage droit et gauche (19) pour pincer l'unité de rail de plafond (7) et une pluralité d'éléments empêchant une chute, capables de recevoir l'unité de rail de plafond (7), étant respectivement agencés sur la partie supérieure du corps principal mobile (14).

11. Dispositif de manutention (10) destiné à être utilisé avec un entrepôt automatisé selon la revendication 10, dans lequel la paire de montants (12) est disposée dans la direction avant-arrière (X) et est reliée aux extrémités supérieures par l'intermédiaire d'une structure de châssis supérieur (13), le chariot (15) est disposé entre les montants (12), une paire de câbles droit et gauche (57A, 57B) sont respectivement enroulés sur une paire de roues de guidage droite et gauche située du côté de la base établie sur la structure de châssis supérieur (13) du côté de l'unité d'entraînement d'élévateur (50), le câble de direction droite-gauche (57A) est relié au chariot (15) alors que l'autre câble de direction droite-gauche (57B) est enroulé sur une roue de guidage côté libre (59) établie sur la structure de châssis supérieur (13) sur un côté éloigné de l'unité d'entraînement d'élévateur (50) et ensuite est relié à l'unité de chariot (15), un jeu est formé entre les roues de guidage côté base (58A, 58B), et la roue de guidage côté libre (59) est disposée au niveau de l'autre côté par rapport au centre du corps principal mobile (14).

12. Dispositif de manutention (10) destiné à être utilisé avec un entrepôt automatisé selon la revendication 10, comportant un seul montant agencé pour relier une pluralité de câbles, à partir d'une pluralité de roues de guidage, au chariot (15).

13. Dispositif de manutention (10) destiné à être utilisé avec un entrepôt automatisé selon l'une quelconque des revendications 10 à 12, comportant une paire de rouleaux de guidage droit et gauche (19) qui sont reliés aux éléments empêchant une chute (93).

14. Dispositif de manutention (10) destiné à être utilisé avec un entrepôt automatisé selon l'une quelconque des revendications 1 à 13, dans lequel le dispositif de manutention (10) est capable de se déplacer librement lui-même sur un chemin prédéterminé (5) par l'intermédiaire d'une pluralité de roues de roulement (17, 18) supportées et guidées respectivement par une unité formant rail de sol (7) ayant une section transversale en forme de I, comportant une pluralité d'objets pouvant être détectés (121) ayant chacun une surface pouvant être détectée (121a) dirigée latéralement et fixés sur une surface latérale d'une partie formant âme (102), un élément formant rebord en saillie (101a) formé à partir d'un premier côté de la structure de châssis supérieur (101) pour faire saillie lui-même vers l'extérieur à l'extérieur d'une plage dans laquelle sont établis les objets pouvant être détectés, et un dispositif de détection de commande de roulement (130) capable d'être librement latéralement en vis-à-vis de chacune des surfaces pouvant être détectées (121) et une pluralité de rouleaux empêchant la chute (140), capables de venir librement en contact avec l'élément formant rebord en saillie (101a) à partir du dessous, sont agencés respectivement en dessous du dispositif de manutention (10).

15. Dispositif de manutention (10) destiné à être utilisé avec un entrepôt automatisé selon la revendication 14, comportant une saillie étendue (101b) formée le long du bord latéral de l'élément formant rebord en saillie (101a).

16. Dispositif de manutention (10) destiné à être utilisé avec un entrepôt automatisé selon la revendication 14 ou 15, comportant un bord latéral de l'élément formant rebord en saillie (101a) faisant saillie vers l'extérieur lui-même encore plus à l'extérieur du bord latéral de l'élément formant rebord inférieur (103).
